# EUROPEAN PATENT APPLICATION

(11) **EP 4 848 771 A1**
(43) Date of publication of application: **02.12.2026**
(21) Application number: 25751443.0
(22) Date of filing: 27.01.2025
(51) Int. Cl.: H04W 12/03

(54) **COMMUNICATION METHOD AND APPARATUS**

(30) Priority: 08.02.2024 CN 202410178204
(71) Applicant: Huawei Technologies Co., Ltd., Shenzhen, Guangdong 518129 (CN)
(72) Inventor: GUO, Yanfei, Shenzhen, Guangdong 518129 (CN); WU, Yizhuang, Shenzhen, Guangdong 518129 (CN); GUO, Longhua, Shenzhen, Guangdong 518129 (CN)
(74) Representative: Huawei European IPR
(86) International application number: PCT/CN2025/075515
(87) International publication number: WO 2025/167843

(57) **Abstract**

A communication method and apparatus are provided to implement security of a communication system in a scenario in which the communication system needs to support both 128-bit algorithms and 256-bit algorithms. The method in this application includes: A master node determines a secondary node based on a key length of a first security algorithm (or a key length of a security algorithm supported by the master node) and a key length of a security algorithm supported by a candidate node. The first security algorithm is a security algorithm used to protect data transmitted between the master node and a terminal device. The candidate node includes the secondary node. The master node sends a node request to the secondary node, where the node request is used to request to add the secondary node. Further, the secondary node determines a second security algorithm, where the second security algorithm is used to protect data transmitted between the secondary node and the terminal device. For example, a key length of the second security algorithm is equal to the key length of the first security algorithm.

## Description

### CROSS-REFERENCE TO RELATED APPLICATIONS

This application claims priority to Chinese Patent Application No. 202410178204.8, filed with the China National Intellectual Property Administration on February 08, 2024 and entitled "COMMUNICATION METHOD AND APPARATUS", which is incorporated herein by reference in its entirety.

### TECHNICAL FIELD

Embodiments of this application relate to the wireless communication field, and in particular, to a communication method and apparatus.

### BACKGROUND

In a communication system, symmetric security algorithms are usually used to protect data transmitted between a terminal device and a network side. A key length used by the symmetric security algorithms is 128 bits (these algorithms may be collectively referred to as 128-bit algorithms). However, with the increase of computational power of computers, especially due to threats posed by quantum computers, the 128-bit algorithms face a risk of being cracked by the quantum computers. Therefore, experts in the industry propose upgrading the symmetric security algorithms from 128-bit algorithms to 256-bit algorithms, that is, using symmetric security algorithms with a key length of 256 bits to protect data.

In a scenario in which 256-bit algorithms are introduced, the communication system needs to support both the 128-bit algorithms and the 256-bit algorithms. However, in this scenario, how to ensure security of the communication system is an urgent technical problem to be resolved.

### SUMMARY

This application provides a communication method and apparatus to implement security of a communication system in a scenario in which the communication system needs to support both 128-bit algorithms and 256-bit algorithms.

According to a first aspect, this application provides a communication method that may be performed by a first communication apparatus. The first communication apparatus may serve as a master node of a terminal device in a dual connectivity (dual connectivity, DC) mode. The first communication apparatus may be a radio access node or a component (for example, a chip) in a radio access node. For ease of description, the following uses an example in which the master node performs the method.

The method includes: The master node determines a secondary node based on a key length of a security algorithm supported by the master node and a key length of a security algorithm supported by a candidate node, or the master node determines a secondary node based on a key length of a first security algorithm and a key length of a security algorithm supported by a candidate node. The first security algorithm is a security algorithm used to protect data transmitted between the master node and the terminal device. The candidate node includes the secondary node. The master node sends a node request to the secondary node, where the node request is used to request to add the secondary node.

In the foregoing technical solution, when selecting the secondary node from the candidate node, the master node considers the key length of the first security algorithm (or the key length of the security algorithm supported by the master node) and the key length of the security algorithm supported by the candidate node, and requests to add the selected secondary node. This makes selection of the secondary node more reasonable and facilitates subsequent selection of an appropriate security algorithm by the secondary node. Specifically, the selected secondary node can meet the following condition: The master node and the secondary node each can determine an appropriate security algorithm, so that security strength of data transmitted between the master node and the terminal device matches security strength of data transmitted between the secondary node and the terminal device, thereby meeting requirements for secure communication. For example, the secondary node selected according to the solution of this application can enable the security algorithms respectively selected by the master node and the secondary node to have a same key length.

Further, when the terminal device uses a redundant data transmission (for example, ultra-reliable and low latency communications (ultra-reliable and low latency communications, URLLC)) service in the dual connectivity mode, two mutually redundant protocol data unit (protocol data unit, PDU) sessions of the terminal device are used for service data transmission, and data corresponding to the two PDU sessions is respectively protected by using the security algorithms selected by the master node and the secondary node. The key lengths of the two security algorithms are the same, which meets a security assumption of redundant data transmission.

In a possible implementation, the key length of the security algorithm supported by the secondary node is not less than the key length of the first security algorithm. For example, a maximum key length of the security algorithm supported by the secondary node is not less than the key length of the first security algorithm. Alternatively, the key length of the security algorithm supported by the secondary node is not less than a maximum key length of the security algorithm supported by the master node. For example, a maximum key length of the security algorithm supported by the secondary node is not less than the maximum key length of the security algorithm supported by the master node.

In the foregoing technical solution, the key length of the security algorithm supported by the secondary node is not less than the key length of the first security algorithm or the key length of the security algorithm supported by the master node, so that the secondary node is capable of selecting an appropriate security algorithm to protect data transmitted between the secondary node and the terminal device. In other words, this avoids a case in which a secondary node arbitrarily determined by the master node cannot select an appropriate security algorithm. For example, if the master node determines to use a 256-bit algorithm to protect data transmitted between the master node and the terminal device. In this case, if the secondary node does not support the 256-bit algorithm but supports only the 128-bit algorithm, the secondary node cannot select the 256-bit algorithm to meet the security requirement.

In a possible implementation, the node request includes information about the key length of the first security algorithm. Specifically, the information about the key length of the first security algorithm is used to determine a security algorithm for data transmitted between the secondary node and the terminal device.

In the foregoing technical solution, the secondary node can obtain the information about the key length of the first security algorithm from the node request, and select the security algorithm based on the information about the key length of the first security algorithm. The master node and the secondary node may each select an appropriate security algorithm and protect, based on the respectively selected security algorithms, data transmitted between the respective node and the terminal device, thereby implementing security of the communication system. For example, the security algorithms respectively selected by the master node and the secondary node have a same key length, which meets the security assumption of redundant data transmission in a scenario in which the terminal device uses a redundant data transmission service.

In a possible implementation, when the key length of the first security algorithm is a preset key length, the node request includes the information about the key length of the first security algorithm, and the preset key length is, for example, 256 bits.

In the foregoing technical solution, a trigger condition for including the information about the key length of the first security algorithm in the node request is provided, namely, that the key length of the first security algorithm is the preset key length. It may be understood that, when the key length of the first security algorithm is less than the preset key length, the information about the key length of the first security algorithm may not need to be carried in the node request, so that a quantity of bits occupied during signaling exchange is reduced.

In a possible implementation, the master node is preconfigured with information about the key length of the security algorithm supported by the candidate node; or the master node obtains, from the candidate node, information about the key length of the security algorithm supported by the candidate node.

The information about the key length of the security algorithm supported by the candidate node may be identifiers of a plurality of key lengths of a plurality of security algorithms supported by the candidate node, or an identifier of a maximum key length among a plurality of key lengths supported by the candidate node, or an indication of whether the candidate node supports the preset key length, where the preset key length may be 256 bits.

In the foregoing technical solution, a manner in which the master node obtains the information about the key length of the security algorithm supported by the candidate node is provided, so that the master node can select the secondary node from the candidate node based on the key length of the security algorithm supported by the candidate node.

In a possible implementation, when it is determined that a redundancy condition is met, the master node determines the secondary node based on the key length of the first security algorithm and the key length of the security algorithm supported by the candidate node; or the master node determines the secondary node based on the key length of the security algorithm supported by the master node and the key length of the security algorithm supported by the candidate node. The redundancy condition includes one or more of the following conditions 1 to 4: the condition 1 in which the terminal device uses a redundant data transmission (such as URLLC) service; the condition 2 in which a redundant user plane path is established for the terminal device; the condition 3 in which a redundant PDU session is established for the terminal device; or the condition 4 in which redundant transmission is implemented for the terminal device.

In the foregoing technical solution, a trigger condition is provided for the master node to consider, when determining the secondary node, the key length of the first security algorithm (or the key length of the security algorithm supported by the master node) and the key length of the security algorithm supported by the candidate node. In other words, the foregoing method is performed when it is determined that the redundancy condition is met, to avoid unnecessary operations of the master node.

According to a second aspect, this application provides a communication method that may be performed by a first communication apparatus. The first communication apparatus may serve as a master node of a terminal device in a dual connectivity mode. The first communication apparatus may be a radio access node or a component (for example, a chip) in a radio access node. For ease of description, the following uses an example in which the master node performs the method.

The method includes: The master node obtains information about a security algorithm supported by a secondary node; and the master node determines a first security algorithm based on the information about the security algorithm supported by the secondary node. The first security algorithm is a security algorithm used to protect data transmitted between the master node and the terminal device. For example, the master node may first select the secondary node from a candidate node, to obtain the information about the security algorithm supported by the secondary node.

In the foregoing technical solution, when determining the first security algorithm, the master node considers the information about the security algorithm supported by the secondary node. In this way, both the master node and the secondary node can determine an appropriate security algorithm, so that security strength of data transmitted between the master node and the terminal device matches security strength of data transmitted between the secondary node and the terminal device, thereby meeting requirements for secure communication. For example, according to the solution of this application, the first security algorithm selected by the master node and the security algorithm selected by the secondary node can have a same key length.

Further, when the terminal device uses a redundant data transmission service in a dual connectivity mode, two mutually redundant PDU sessions of the terminal device are used for service data transmission, and data corresponding to the two PDU sessions is respectively protected by the master node and the secondary node by using the respectively selected security algorithms. The key lengths of the two security algorithms are the same, which meets a security assumption of redundant data transmission.

In a possible implementation, the information about the security algorithm supported by the secondary node includes information about a key length of the security algorithm supported by the secondary node and/or an identifier of the security algorithm supported by the secondary node. The information about the key length of the security algorithm supported by the secondary node may be specifically identifiers of a plurality of key lengths supported by the secondary node, or an identifier of a maximum key length supported by the secondary node, or an indication of whether the secondary node supports a preset key length, where the preset key length is, for example, 256 bits.

In a possible implementation, the master node further sends a node request to the secondary node, where the node request is used to request to add the secondary node. For example, the node request includes information about the key length of the first security algorithm. Specifically, the information about the key length of the first security algorithm is used to determine a security algorithm for the data transmitted between the secondary node and the terminal device. For example, the information about the key length of the first security algorithm is used by the secondary node to determine the security algorithm of the data transmitted between the secondary node and the terminal device.

In the foregoing technical solution, the secondary node can obtain the information about the key length of the first security algorithm from the node request, and select the security algorithm based on the information about the key length of the first security algorithm. In this way, the secondary node may select a security algorithm whose key length matches (or corresponds to) the key length of the first security algorithm. In this way, when the master node and the secondary node each protect, based on their respectively selected security algorithms, data transmitted between the respective node and the terminal device, security of a communication system is implemented. Further, the security algorithm selected by the secondary node and the first security algorithm may have a same key length, which meets the security assumption of redundant data transmission in a scenario in which the terminal device uses a redundant data transmission service.

In a possible implementation, when the key length of the first security algorithm is the preset key length, the node request includes the information about the key length of the first security algorithm.

In the foregoing technical solution, a trigger condition for including the information about the key length of the first security algorithm in the node request is provided, namely, that the key length of the first security algorithm is the preset key length. It may be understood that, when the key length of the first security algorithm is less than the preset key length, the information about the key length of the first security algorithm may not need to be carried in the node request, so that a quantity of bits occupied during signaling exchange is reduced.

In a possible implementation, that the master node obtains the information about the security algorithm supported by the secondary node may be specifically that the master node is preconfigured with the information about the security algorithm supported by the secondary node; or the master node obtains, from the secondary node, the information about the security algorithm supported by the secondary node.

In the foregoing technical solution, a manner in which the master node obtains the information about the security algorithm supported by the secondary node is provided, so that the master node can determine the first security algorithm based on the information about the security algorithm supported by the secondary node.

In a possible implementation, when it is determined that a redundancy condition is met, the master node determines the first security algorithm based on the information about the security algorithm supported by the secondary node. The redundancy condition includes one or more of the following conditions 1 to 4: the condition 1 in which the terminal device uses a redundant data transmission (such as URLLC) service; the condition 2 in which a redundant user plane path is established for the terminal device; the condition 3 in which a redundant PDU session is established for the terminal device; or the condition 4 in which redundant transmission is implemented for the terminal device.

In the foregoing technical solution, a trigger condition is provided for the master node to consider, when determining the first security algorithm, the information about the security algorithm supported by the secondary node. In other words, the foregoing method is performed when it is determined that the redundancy condition is met, to avoid unnecessary operations of the master node.

In a possible implementation, the information about the security algorithm includes information about the key length of the security algorithm. The master node determining the first security algorithm based on the information about the security algorithm supported by the secondary node may be specifically that the master node determines the first security algorithm based on the information about the key length of the security algorithm supported by the secondary node and the information about the security algorithm supported by the master node.

For example, the master node determines, based on the information about the key length of the security algorithm supported by the secondary node, a maximum key length supported by the secondary node, and determines the first security algorithm based on the maximum key length supported by the secondary node and the information about the security algorithm supported by the master node.

The key length of the security algorithm supported by the secondary node includes the key length of the first security algorithm.

In the foregoing technical solution, when determining the first security algorithm, the master node considers the key length of the security algorithm supported by the secondary node. In this way, both the master node and the secondary node can determine an appropriate security algorithm, so that security strength of data transmitted between the master node and the terminal device matches security strength of data transmitted between the secondary node and the terminal device, thereby meeting requirements for secure communication. Further, in the scenario in which the terminal device uses the redundant data transmission service, the security assumption of redundant data transmission is met.

In a possible implementation, the information about the security algorithm includes the identifier of the security algorithm. The master node determining the first security algorithm based on the information about the security algorithm supported by the secondary node may be specifically that the master node determines the first security algorithm and a second security algorithm based on the identifier of the security algorithm supported by the secondary node and the information about the security algorithm supported by the master node. The second security algorithm is a security algorithm used to protect data transmitted between the secondary node and the terminal device. Further, the master node sends an identifier of the second security algorithm to the secondary node.

In the foregoing technical solution, the master node independently determines the first security algorithm, and also selects the second security algorithm for the secondary node. In this way, the master node can ensure that security strength of data transmitted between the master node and the terminal device matches security strength of data transmitted between the secondary node and the terminal device. For example, the master node can ensure that the key length of the first security algorithm is the same as the key length of the second security algorithm, thereby implementing security of the communication system. In the scenario in which the terminal device uses the redundant data transmission service, the security assumption of redundant data transmission is met.

According to a third aspect, this application provides a communication method that may be performed by a first communication apparatus. The first communication apparatus may serve as a master node of a terminal device in a dual connectivity mode. The first communication apparatus may be a radio access node or a component (for example, a chip) in a radio access node. For ease of description, the following uses an example in which the master node performs the method.

The method includes: The master node determines a first security algorithm, where the first security algorithm is a security algorithm used to protect data transmitted between the master node and the terminal device; and the master node sends a node request to a secondary node, where the node request is used to request to add the secondary node, and the node request includes information about a key length of the first security algorithm. For example, the information about the key length of the first security algorithm may be used for one or more of the following purposes: used by the secondary node to determine whether the key length of the first security algorithm is supported, used by the secondary node to determine a second security algorithm, used by the secondary node to determine whether a key length of the second security algorithm matches the key length of the first security algorithm, or used by the secondary node to determine a node response to be sent to the master node. The second security algorithm is a security algorithm determined by the secondary node for protecting data transmitted between the secondary node and the terminal device. The node response indicates that the secondary node fails to be added, or the node response indicates that the secondary node is successfully added.

In a possible implementation, the master node may further receive a node response from the secondary node, where the node response indicates that the secondary node fails to be added. Further, the master node reselects a secondary node, and sends the node request to the reselected secondary node. Optionally, the master node further receives a node response from the reselected secondary node, and the node response indicates that the secondary node is successfully added.

In the foregoing technical solution, the master node determines, by sending the node request to the secondary node and receiving the node response from the secondary node, a secondary node that can be successfully added. The successfully added secondary node can meet the following condition: The master node and the secondary node each can determine an appropriate security algorithm, so that security strength of data transmitted between the master node and the terminal device matches security strength of data transmitted between the secondary node and the terminal device, thereby meeting requirements for secure communication. For example, the secondary node added according to the solution of this application can enable the security algorithms respectively selected by the master node and the secondary node to have a same key length.

Further, when the terminal device uses a redundant data transmission service in a dual connectivity mode, two mutually redundant PDU sessions of the terminal device are used for service data transmission, and data corresponding to the two PDU sessions is respectively protected by the master node and the secondary node by using the respectively selected security algorithms. The key lengths of the two security algorithms are the same, which meets a security assumption of redundant data transmission.

In a possible implementation, when it is determined that a redundancy condition is met, the master node sends, to the secondary node, the node request including the information about the key length of the first security algorithm. The redundancy condition includes one or more of the following conditions 1 to 4: the condition 1 in which the terminal device uses a redundant data transmission (such as URLLC) service; the condition 2 in which a redundant user plane path is established for the terminal device; the condition 3 in which a redundant PDU session is established for the terminal device; or the condition 4 in which redundant transmission is implemented for the terminal device.

In the foregoing technical solution, a trigger condition for including the information about the key length of the first security algorithm in the node request is provided, that is, the foregoing method is performed when it is determined that the redundancy condition is met, to avoid unnecessary operations of the master node.

In a possible implementation, when the key length of the first security algorithm is a preset key length, the node request includes the information about the key length of the first security algorithm, and the preset key length is, for example, 256 bits.

In the foregoing technical solution, another trigger condition for including the information about the key length of the first security algorithm in the node request is provided, namely, that the key length of the first security algorithm is the preset key length. It may be understood that, when the key length of the first security algorithm is less than the preset key length, the information about the key length of the first security algorithm may not need to be carried in the node request, so that a quantity of bits occupied during signaling exchange is reduced.

According to a fourth aspect, this application provides a communication method that may be performed by a second communication apparatus. The second communication apparatus may serve as a secondary node of a terminal device in a dual connectivity mode. The second communication apparatus may be a radio access node or a component (for example, a chip) in a radio access node. For ease of description, the following uses an example in which the secondary node performs the method.

The method includes: The secondary node receives a node request from a master node, where the node request is used to request to add the secondary node, the node request includes information about a key length of a first security algorithm, and the first security algorithm is a security algorithm used to protect data transmitted between the master node and the terminal device; and the secondary node determines a second security algorithm based on the information about the key length of the first security algorithm, where the second security algorithm is a security algorithm used to protect data transmitted between the secondary node and the terminal device.

In a possible implementation, a key length of the second security algorithm is the same as the key length of the first security algorithm.

According to a fifth aspect, this application provides a communication method that may be performed by a second communication apparatus. The second communication apparatus may serve as a secondary node of a terminal device in a dual connectivity mode. The second communication apparatus may be a radio access node or a component (for example, a chip) in a radio access node. For ease of description, the following uses an example in which the secondary node performs the method.

The method includes: The secondary node receives a node request from a master node, where the node request is used to request to add the secondary node, and the node request includes an identifier of a second security algorithm; and the secondary node communicates data with the terminal device based on the second security algorithm.

In a possible implementation, before communicating data with the terminal device based on the second security algorithm, the secondary node may further determine that the secondary node and/or the terminal device support/supports the second security algorithm. For example, the secondary node further obtains, from the node request, security algorithms supported by the terminal device, to determine that the security algorithms supported by the terminal device include the second security algorithm.

In a possible implementation, the secondary node may further send a node response to the master node, where the node response indicates that the secondary node is successfully added, and the node response does not carry the identifier of the second security algorithm.

According to a sixth aspect, this application provides a communication method that may be performed by a second communication apparatus. The second communication apparatus may serve as a secondary node of a terminal device in a dual connectivity mode. The second communication apparatus may be a radio access node or a component (for example, a chip) in a radio access node. For ease of description, the following uses an example in which the secondary node performs the method.

The method includes: The secondary node receives a node request, where the node request is used to request to add the secondary node, the node request includes information about a key length of a first security algorithm, and the first security algorithm is a security algorithm used to protect data transmitted between a master node and the terminal device; and
when it is determined that the key length of the first security algorithm is not supported, the secondary node sends a node response to the master node, where the node response indicates that the secondary node fails to be added; or
the secondary node selects a second security algorithm, and when the key length of the first security algorithm is different from a key length of the second security algorithm, sends a node response to the master node, where the node response indicates that the secondary node fails to be added; or
the secondary node selects a second security algorithm, and when the key length of the first security algorithm is the same as a key length of the second security algorithm, sends a node response to the master node, where the node response indicates that the secondary node is successfully added; or
the secondary node selects a second security algorithm based on the key length of the first security algorithm, and sends a node response to the master node, where the node response indicates that the secondary node is successfully added, and the key length of the first security algorithm is the same as a key length of the second security algorithm.

According to a seventh aspect, an embodiment of this application provides a communication apparatus. The apparatus has a function of implementing the first communication apparatus in the first aspect or any one of the possible implementations of the first aspect, or the apparatus has a function of implementing the first communication apparatus in the second aspect or any one of the possible implementations of the second aspect, or the apparatus has a function of implementing the first communication apparatus in the third aspect or any one of the possible implementations of the third aspect, or the apparatus has a function of implementing the second communication apparatus in the fourth aspect or any one of the possible implementations of the fourth aspect, or the apparatus has a function of implementing the second communication apparatus in the fifth aspect or any one of the possible implementations of the fifth aspect, or the apparatus has a function of implementing the second communication apparatus in the sixth aspect or any one of the possible implementations of the sixth aspect.

The first communication apparatus may serve as a master node of a terminal device in a dual connectivity mode. The first communication apparatus may be a radio access node or a component (for example, a chip) in a radio access node. The second communication apparatus may serve as a secondary node of the terminal device in the dual connectivity mode. The second communication apparatus may be a radio access node or a component (for example, a chip) in a radio access node.

The functions of the communication apparatus may be implemented by hardware, or may be implemented by hardware executing corresponding software. The hardware or the software includes one or more modules, units, or means (means) corresponding to the functions.

In a possible implementation, a structure of the apparatus includes a processing module and a transceiver module.

The processing module is configured to support the apparatus in implementing the method of the first communication apparatus in the first aspect or any one of the possible implementations of the first aspect, the method of the first communication apparatus in the second aspect or any one of the possible implementations of the second aspect, the method of the first communication apparatus in the third aspect or any one of the possible implementations of the third aspect, or the method of the second communication apparatus in the fourth aspect or any one of the possible implementations of the fourth aspect; the method of the second communication apparatus in the fifth aspect or any one of the possible implementations of the fifth aspect, or the method of the second communication apparatus in the sixth aspect or any one of the possible implementations of the sixth aspect.

The transceiver module is configured to support communication between the apparatus and another communication device. For example, when the apparatus is the first communication apparatus, the apparatus may send a node request to the second communication apparatus. The communication apparatus may further include a storage module. The storage module is coupled to the processing module and stores program instructions and data that are necessary for the apparatus. In an example, the processing module may be a processor, the communication module may be a transceiver, the storage module may be a memory, and the memory may be integrated with the processor, or may be disposed separately from the processor.

In another possible implementation, a structure of the apparatus includes a processor, and may further include a memory. The processor is coupled to the memory and may be configured to execute computer program instructions stored in the memory, so that the apparatus implements the method of the first communication apparatus in the first aspect or any one of the possible implementations of the first aspect, the method of the first communication apparatus in the second aspect or any one of the possible implementations of the second aspect, the method of the first communication apparatus in the third aspect or any one of the possible implementations of the third aspect, or the method of the second communication apparatus in the fourth aspect or any one of the possible implementations of the fourth aspect; the method of the second communication apparatus in the fifth aspect or any one of the possible implementations of the fifth aspect, or the method of the second communication apparatus in the sixth aspect or any one of the possible implementations of the sixth aspect. Optionally, the apparatus further includes a communication interface, and the processor is coupled to the communication interface. When the apparatus is a radio access node, the communication interface may be a transceiver or an input/output interface. When the apparatus is a chip included in a radio access node, the communication interface may be an input/output interface of the chip. Optionally, the transceiver may be a transceiver circuit, and the input/output interface may be an input/output circuit.

According to an eighth aspect, an embodiment of this application provides a chip system, including:
a processor and a memory. The processor is coupled to the memory, and the memory is configured to store a program or instructions. When the program and the instructions are executed by the processor, the chip system is enabled to implement the method of the first communication apparatus in the first aspect or any one of the possible implementations of the first aspect, the method of the first communication apparatus in the second aspect or any one of the possible implementations of the second aspect, the method of the first communication apparatus in the third aspect or any one of the possible implementations of the third aspect, or the method of the second communication apparatus in the fourth aspect or any one of the possible implementations of the fourth aspect; the method of the second communication apparatus in the fifth aspect or any one of the possible implementations of the fifth aspect, or the method of the second communication apparatus in the sixth aspect or any one of the possible implementations of the sixth aspect.

Optionally, the chip system further includes an interface circuit, and the interface circuit is configured to transfer code instructions to the processor.

Optionally, there may be one or more processors in the chip system, and the processor may be implemented by using hardware or may be implemented by using software. When the processor is implemented by using the hardware, the processor may be a logic circuit, an integrated circuit, or the like. When the processor is implemented by using the software, the processor may be a general-purpose processor, and is implemented by reading software code stored in the memory.

Optionally, there may also be one or more memories in the chip system. The memory may be integrated with the processor, or may be disposed separately from the processor. For example, the memory may be a non-transitory processor, for example, a read-only memory (read-only memory, ROM). The memory and the processor may be integrated on a same chip, or may be disposed separately on different chips.

According to a ninth aspect, this application provides a computer-readable storage medium. The computer-readable storage medium stores a computer program or instructions. When the computer program or the instructions are executed by a communication apparatus, the communication apparatus is enabled to implement the method of the first communication apparatus in the first aspect or any one of the possible implementations of the first aspect, or the method of the first communication apparatus in the second aspect or any one of the possible implementations of the second aspect; the method of the first communication apparatus in the third aspect or any one of the possible implementations of the third aspect, the method of the second communication apparatus in the fourth aspect or any one of the possible implementations of the fourth aspect, the method of the second communication apparatus in the fifth aspect or any one of the possible implementations of the fifth aspect, or the method of the second communication apparatus in the sixth aspect or any one of the possible implementations of the sixth aspect.

According to a tenth aspect, this application provides a computer program product. The computer program product includes a computer program or instructions. When the computer program or the instructions are executed by a communication apparatus, the communication apparatus is enabled to implement the method of the first communication apparatus in the first aspect or any one of the possible implementations of the first aspect, the method of the first communication apparatus in the second aspect or any one of the possible implementations of the second aspect, the method of the first communication apparatus in the third aspect or any one of the possible implementations of the third aspect, or the method of the second communication apparatus in the fourth aspect or any one of the possible implementations of the fourth aspect; the method of the second communication apparatus in the fifth aspect or any one of the possible implementations of the fifth aspect, or the method of the second communication apparatus in the sixth aspect or any one of the possible implementations of the sixth aspect.

According to an eleventh aspect, an embodiment of this application provides a communication system. The system includes:
the first communication apparatus in the first aspect or any one of the possible implementations of the first aspect and the second communication apparatus in the fourth aspect or any one of the possible implementations of the fourth aspect; or
the first communication apparatus in the second aspect or any one of the possible implementations of the second aspect and the second communication apparatus in the fourth aspect or any one of the possible implementations of the fourth aspect; or
the first communication apparatus in the second aspect or any one of the possible implementations of the second aspect, and the second communication apparatus in the fifth aspect or any one of the possible implementations of the fifth aspect; or
the first communication apparatus according to the third aspect or any one of the possible implementations of the third aspect, and the second communication apparatus according to the sixth aspect or any one of the possible implementations of the sixth aspect.

For technical effects that can be achieved in any one of the fourth aspect to the eleventh aspect, refer to descriptions of beneficial effects in the first aspect to the third aspect. Details are not described herein again.

### BRIEF DESCRIPTION OF DRAWINGS

FIG. 1 is a diagram of a 5G network architecture;
FIG. 2 is a diagram of a key derivation architecture in a 5G system;
FIG. 3 is a diagram of user plane paths for a URLLC service;
FIG. 4 is a schematic flowchart of a first communication method according to this application;
FIG. 5 is a schematic flowchart of a second communication method according to this application;
FIG. 6 is a schematic flowchart of a third communication method according to this application;
FIG. 7 is a schematic flowchart of a fourth communication method according to this application;
FIG. 8 is a schematic flowchart of a fifth communication method according to this application;
FIG. 9 is a schematic flowchart of a first determining method of a secondary node in a fifth communication method according to this application;
FIG. 10 is a schematic flowchart of a second determining method of a secondary node in a fifth communication method according to this application;
FIG. 11 is a schematic flowchart of a third determining method of a secondary node in a fifth communication method according to this application;
FIG. 12 is a schematic flowchart in which a master node determines that a redundancy condition is met according to this application;
FIG. 13 is a diagram of a structure of a communication apparatus according to this application; and
FIG. 14 is a diagram of a structure of still another communication apparatus according to this application.

### DESCRIPTION OF EMBODIMENTS

The following first describes related technical features in embodiments of this application. It should be noted that these explanations are intended to make embodiments of this application easier to understand, but should not be considered as limitations on the protection scope claimed in this application.

### 1. 5G network architecture

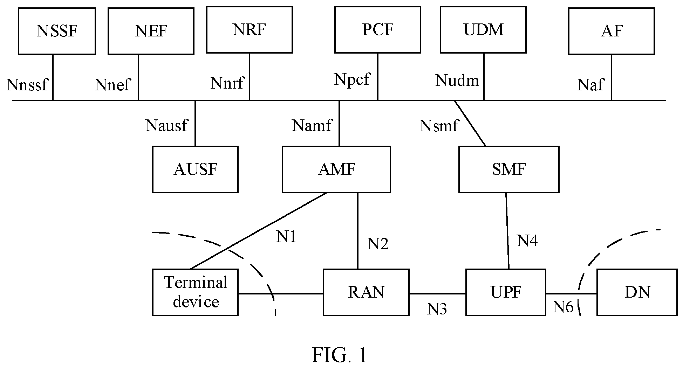

FIG. 1 is a diagram of a 5G network architecture. The 5G network architecture shown in FIG. 1 may include three parts: a terminal device part, a data network (data network, DN) part, and an operator network part. The following briefly describes functions of some network elements in the architecture.

The operator network may include one or more of the following network elements (or devices, functions, or nodes): a radio access node (radio access node, RAN), an authentication server function (authentication server function, AUSF), a network exposure function (network exposure function, NEF), a policy control function (policy control function, PCF), unified data management (unified data management, UDM), a unified data repository (unified data repository, UDR), a network repository function (network repository function, NRF), an access and mobility management function (access and mobility management function, AMF), a session management function (session management function, SMF), a user plane function (user plane function, UPF), an application function (application function, AF), or the like.

A terminal device (terminal device), which may also be referred to as user equipment (user equipment, UE), is a device having a wireless transceiver function. The terminal device may be deployed on land, where the deployment includes indoor or outdoor, or handheld or vehicle-mounted deployment; may be deployed on water (for example, on a ship); or may be deployed in air (for example, on an airplane, a balloon, and a satellite). The terminal device may be a mobile phone (mobile phone), a tablet computer (pad), a computer having a wireless transceiver function, a virtual reality (virtual reality, VR) terminal, an augmented reality (augmented reality, AR) terminal, a wireless terminal in industrial control (industrial control), a wireless terminal in self driving (self driving), a wireless terminal in remote medical (remote medical), a wireless terminal in a smart grid (smart grid), a wireless terminal in transportation safety (transportation safety), a wireless terminal in a smart city (smart city), a wireless terminal in a smart home (smart home), or the like.

The terminal device may establish a connection to the operator network through an interface (for example, N1) provided by the operator network, and use a service such as data and/or voice provided by the operator network. The terminal device may further access the DN through the operator network and use an operator service deployed on the DN and/or a service provided by a third party. The third party may be a service party other than the operator network and the terminal device and may provide services such as a data service and/or a voice service for the terminal device. A specific representation form of the third party may be specifically determined based on an actual application scenario, and is not limited herein.

The radio access node is configured to provide a network access function for an authorized terminal device in a specific area, and can use transmission tunnels with different quality of service based on levels of terminal devices, service requirements, and the like. The radio access node can manage radio resources, provide an access service for the terminal device, and complete forwarding of a control signal and data between the terminal device and a core network. The radio access node may also be understood as a base station in a conventional network. For example, the radio access node may be any communication device that has a wireless transceiver function and is configured to communicate with the terminal device. The radio access node includes but is not limited to an evolved NodeB (evolved NodeB, eNB), a gNB in a 5G system, or a transmission point (TRP or TP), or one antenna panel or a group of antenna panels (including a plurality of antenna panels) of a base station in a 5G system, or may be a network node, for example, a baseband unit (base band unit, BBU) or a distributed unit (distributed unit, DU), included in a gNB or a transmission point, or may be a pole site, a micro base station, a macro base station, an integrated access and backhaul (integrated access and backhaul, IAB) node, or the like.

The core network part includes a user plane function and a control plane function.

The user plane function includes a UPF. As an interface to the data network, the UPF completes functions such as forwarding of user plane data (for example, a data packet), quality of service (quality of service, QoS) control, session/flow-level charging statistics collection, and bandwidth limiting.

The control plane function is mainly for user registration and authentication, mobility management, delivery of a data packet forwarding policy and a QoS control policy to the user plane function, and the like. The control plane function may further include network elements other than the UPF, for example, the AMF and the SMF.

The AMF mainly performs functions such as a registration procedure during user access and location management and access authentication/authorization during user movement. In addition, the AMF is also responsible for transport of a user policy between the terminal device and the PCF.

The SMF is mainly configured to: establish a corresponding session connection when a user initiates a service, and provide a specific service for the user, for example, deliver a data packet forwarding policy or a QoS policy to the UPF through an NG4 interface between the SMF and the UPF.

The AUSF is mainly responsible for authenticating the user and determining validity of the terminal device, to determine whether to allow the terminal device to access the network.

The UDM is mainly responsible for functions such as storage of subscription data of the terminal device and user access authorization.

The UDR is mainly responsible for functions of storing and accessing data such as subscription data, policy data, application data, or the like.

The PCF is mainly responsible for delivering a service-related policy to the AMF or the SMF.

The NEF is mainly configured to support capability and event exposure.

The AF mainly transfers a requirement of an application side on a network side to the PCF, so that the PCF generates a corresponding policy. The AF may be a third-party functional entity, or may be an application service deployed by an operator, for example, an internet protocol (internet protocol, IP) multimedia subsystem (IP multimedia subsystem, IMS) voice call service.

The NRF may be configured to: provide a network element discovery function, and provide, based on a request of another network element, network element information corresponding to a network element type. The NRF further provides a network element management service, for example, network element registration, update, and deregistration, and network element status subscription and push.

The DN is a network located outside an operator network. The operator network may access a plurality of DNs, and a plurality of services may be deployed on the DN, to provide services such as data and/or voice for a terminal device. For example, the DN is a private network of a smart factory, a sensor installed in a workshop of the smart factory may be the terminal device, a control server of the sensor is deployed in the DN, and the control server may provide a service for the sensor. The sensor may communicate with the control server to obtain an instruction of the control server, transmit collected sensor data to the control server according to the instruction, and the like. For another example, the DN is an internal office network of a company, a mobile phone or a computer of an employee of the company may be the terminal device, and the mobile phone or the computer of the employee may access information, data resources, and the like on the internal office network of the company.

In FIG. 1, Nnssf, Nausf, Nnef, Nnrf, Npcf, Nudm, Naf, Namf, Nsmf, N1, N2, N3, N4, and N6 are interface sequence numbers. For meanings of the interface sequence numbers, refer to meanings defined in the 3rd generation partnership project (3rd generation partnership project, 3GPP) protocol. This is not limited herein.

It may be understood that, the foregoing network elements may be network elements in a hardware device, or may be software functions running on dedicated hardware, or may be virtualization functions instantiated on a platform (for example, a cloud platform). Optionally, the network elements may be implemented by one device, or may be jointly implemented by a plurality of devices, or may be a functional module in one device. This is not specifically limited in embodiments of this application.

Network elements in embodiments of this application may be the AMF, the AUSF, the UDM, or the like in FIG. 1, or may be network elements having functions of the AMF, the AUSF, the UDM, and the like in a future communication network such as a 6th generation (6th generation, 6G) network. This is not limited in embodiments of this application.

### 2. 256-bit algorithms

Security algorithms (also referred to as cryptographic algorithms) are the security foundation of communication systems and are widely used in mobile communication network systems.

Security algorithms are generally classified into symmetric security algorithms and asymmetric security algorithms. The symmetric security algorithms may include a symmetric encryption algorithm, a hash algorithm, and an integrity protection algorithm (for example, medium access control (medium access control, MAC), or hash-based message authentication code (hash MAC, HMAC)). The asymmetric security algorithms may include an asymmetric encryption algorithm, a digital signature algorithm, a key exchange algorithm, and the like. Further, the asymmetric security algorithms are mainly used for identity authentication, key negotiation, and key establishment between two or more interaction parties at an initial stage of system setup. After a key is established, the two or more interaction parties can use the symmetric security algorithms to protect, based on the established key, information exchanged between the two or more interaction parties.

Currently, in a communication system, symmetric security algorithms used for protecting signaling and data exchanged between a terminal device and a network side (for example, an AMF or a radio access node) include an advanced encryption standard (advanced encryption standard, AES), SNOW3G, a ZUC (ZUC) algorithm, and the like. A key length currently used by these symmetric security algorithms is 128 bits (these algorithms may be collectively referred to as 128-bit algorithms). However, with the increase of computational power of computers, especially due to threats posed by quantum computers, the 128-bit algorithms face a risk of being cracked by the quantum computers. For example, with the help of the quantum computers, Grover's algorithm can reduce the difficulty of brute-force cracking from N attempts to N^{1/2} attempts. In this way, the security of 128-bit encryption (key space) is reduced to 64 bits. To defend against the threats posed by the quantum computers, cryptographic experts in the industry propose upgrading the symmetric security algorithms from 128-bit algorithms to 256-bit algorithms, that is, using symmetric security algorithms with a key length of 256 bits to protect data.

### 3. 5G key derivation architecture

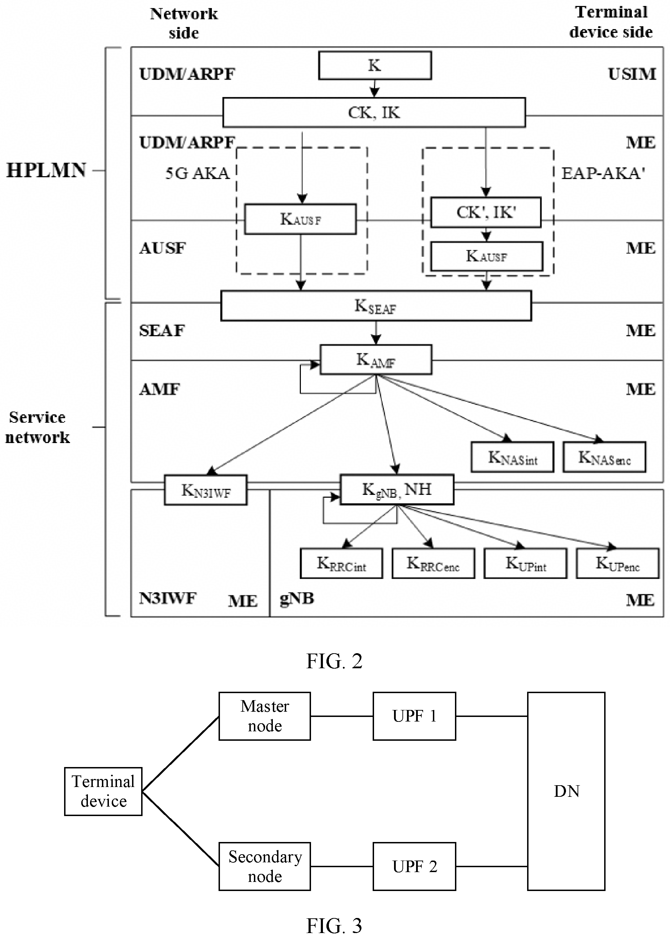

A key derivation architecture in a 5G system is shown in FIG. 2. A universal subscriber identity module (universal subscriber identity module, USIM) card in a terminal device and a UDM (or an authentication credential repository and processing function (authentication credential repository and processing function, ARPF)) side store a long-term key K of the terminal device.

When the terminal device registers with a network, a primary authentication procedure is triggered. The primary authentication procedure is as follows.

On the terminal device side, the terminal device derives a CK and an IK based on the long-term key K of the terminal device, and sequentially derives an AUSF key (K_{AUSF}) and a SEAF key (K_{SEAF}) based on a concatenation result of the CK and the IK. Then, the terminal device derives an AMF key (K_{AMF}) based on the SEAF key. The terminal device further derives a non-access stratum (non-access stratum, NAS) key (K_{NAS}) and a gNB key (K_{gNB}) based on the AMF key. The gNB key is used by the terminal device to generate an access stratum (access stratum, AS) key. The AS key includes a radio resource control (radio resource control, RRC) key (K_{RRC}) and a user plane (user plane, UP) key (K_{UP}).

On the network side, the UDM derives the AUSF key based on the concatenation result of the CK and IK, and provides the AUSF key to an AUSF. The AUSF derives the SEAF key based on the AUSF key, and provides the SEAF key to a SEAF. The SEAF derives the AMF key based on the SEAF key, and provides the AMF key to an AMF. The AMF derives the NAS key, a non-3GPP interworking function (non-3gpp interworking function, N3IWF) key, and the gNB key based on the AMF key. The AMF provides the N3IWF key to the N3IWF, where the N3IWF key is used to protect subsequent non-3GPP access data traffic, and provides the gNB key and a next hop (next hop, NH) parameter to the gNB. The gNB generates the RRC key and the user plane key based on the gNB key and the NH parameter.

Further, the RRC key includes an RRC encryption key (K_{RRCenc}) and an RRC integrity protection key (K_{RRCint}). The user plane key includes a user plane encryption key (K_{UPenc}) and a user plane integrity protection key (K_{UPint}). During user data transmission, the user plane encryption key is used by the terminal device and the gNB to perform encryption protection on the user data, and the user plane integrity protection key is used by the terminal device and the gNB to perform integrity protection on the user data.

### 4. Security capabilities of a terminal device

Security capabilities of a terminal device include security algorithms supported by the terminal device. The security algorithms supported by the terminal device are used in algorithm negotiation in a mobile communication network. The terminal device reports the security algorithms supported by the terminal device to a network side, and the network side selects, based on priorities of local security algorithms and the security algorithms supported by the terminal device, a security algorithm that is supported by both the network side and the terminal device and has a high priority. For example, an AMF on the network side determines a NAS security algorithm for protecting NAS messages between the terminal device and the AMF; and a radio access node on the network side determines an AS security algorithm for protecting AS messages between the terminal device and the radio access node. Currently, a key length of the security algorithms supported by the terminal device may be 128 bits, and security algorithms having a key length of 256 bits or even 512 bits may be supported in future communication.

### 5. Dual connectivity (dual connectivity, DC) mode and security algorithm selection in the dual connectivity mode

Dual connectivity is an operation mode of a terminal device in an RRC connected state. In this mode, the terminal device is simultaneously connected to two different radio access nodes. The two radio access nodes may use a same communication standard or different communication standards. A radio access node whose control plane is connected to a core network may be referred to as a master node (master node, MN), and a radio access node whose control plane is not connected to the core network may be referred to as a secondary node (secondary node, SN). The secondary node may also be referred to as a slave node.

Advantages of dual connectivity are as follows. (1) A single radio access node provides limited radio resources. If the terminal device can be simultaneously connected to two radio access nodes, the terminal device can use radio resources of the two radio access nodes, thereby effectively improving a throughput rate. (2) There may be radio access nodes of different communication standards (for example, a 4G radio access node and a 5G radio access node) in the networking. If the terminal device can be connected to two radio access nodes of different communication standards, the terminal device can flexibly adapt to a networking environment.

In the dual connectivity mode, the master node may obtain security algorithms supported by the terminal device, select a security algorithm (denoted as a security algorithm A) based on the security algorithms supported by the terminal device, security algorithms supported by the master node, and priorities of the security algorithms supported by the master node, and send an identifier of the security algorithm A to the terminal device. Further, the master node may further send the security algorithms supported by the terminal device to the secondary node. Correspondingly, the secondary node selects a security algorithm (denoted as a security algorithm B) based on the security algorithms supported by the terminal device, security algorithms supported by the secondary node, and priorities of the security algorithms supported by the secondary node. The secondary node sends an identifier of the security algorithm B to the master node, and then the master node sends the identifier of the security algorithm B to the terminal device. In this way, when the master node communicates data with the terminal device, the security algorithm A can be used for data protection; and when the secondary node communicates data with the terminal device, the security algorithm B can be used for data protection.

### 6. Ultra-reliable and low latency communications (ultra-reliable and low latency communications, URLLC) and security algorithm selection for URLLC

To implement a URLLC service of a terminal device, the terminal device may establish two protocol data unit (protocol data unit, PDU) sessions (sessions) on a 5G network. The two PDU sessions correspond to separate user plane paths. FIG. 3 is a diagram of user plane paths for the URLLC service. A user plane corresponding to one PDU session passes through a master node and a UPF 1, a user plane corresponding to the other PDU session passes through a secondary node and a UPF 2, and the UPF 1 and the UPF 2 are connected to a same DN. Data transmitted in the two PDU sessions meets a security assumption of redundant data transmission. In other words, the transmitted data is the same, and key lengths of security algorithms used during data transmission are the same.

In a scenario in which 256-bit algorithms are introduced, a communication system needs to support both 128-bit algorithms and 256-bit algorithms. However, in this scenario, how to ensure security of the communication system is an urgent technical problem to be resolved.

Further, based on the foregoing manner of security algorithm selection in the dual connectivity mode, when key lengths of the security algorithms supported by the master node and the secondary node are different, for example, the key lengths of the security algorithms supported by the master node are 256 bits and 128 bits, the key length of the security algorithm supported by the secondary node is 128 bits, and key lengths of security algorithms supported by the terminal device are 256 bits and 128 bits, then the master node may select a security algorithm having a key length of 256 bits (namely, a 256-bit algorithm) for data transmission with the terminal device, while the secondary node selects a security algorithm having a key length of 128 bits (namely, a 128-bit algorithm) for data transmission with the terminal device. Consequently, the key lengths of the security algorithms corresponding to the two sessions are different, which does not meet the security assumption of redundant data transmission (for example, URLLC) service in the dual connectivity mode.

Therefore, this application provides five communication methods to implement security of a communication system in a scenario in which the communication system needs to support both 128-bit algorithms and 256-bit algorithms. Further, when a terminal device uses a redundant data transmission service in a dual connectivity mode, key lengths of security algorithms corresponding to two PDU sessions of the terminal device are the same, which meets the security assumption of redundant data transmission.

The five communication methods may be performed by a first communication apparatus and a second communication apparatus.

The first communication apparatus and the second communication apparatus may be respectively used as a master node and a secondary node of the terminal device in the dual connectivity mode. Further, the first communication apparatus may be a radio access node or a component (for example, a chip) in a radio access node, and the second communication apparatus may be a radio access node or a component (for example, a chip) in a radio access node. For ease of description, the following uses the master node and the secondary node as examples.

In this application, a security algorithm may also be referred to as a cryptographic algorithm, a security protection algorithm, a protection algorithm, or the like. For example, the security algorithm may be specifically a symmetric cryptographic algorithm. For example, the security algorithm is an integrity protection algorithm, or the security algorithm is an encryption algorithm, or the security algorithm includes an integrity protection algorithm and an encryption algorithm, or the security algorithm is an authenticated encryption with associated data (authenticated encryption with associated data, AEAD) algorithm. The AEAD algorithm corresponds to an AEAD mode. In other words, when the master node (or the secondary node) communicates data with the terminal device, the AEAD algorithm is used for both data integrity protection and data encryption protection.

In this application, a key length of a security algorithm may be used to indicate data protection strength of the security algorithm. A longer key length of a security algorithm indicates stronger data protection strength of the security algorithm. For example, if a key length of a security algorithm 1 is 256 bits, and a key length of a security algorithm 2 is 128 bits, then data protection strength of the security algorithm 1 is higher than (or stronger than) data protection strength of the security algorithm 2. The key length of a security algorithm may be further used to indicate algorithm strength of the security algorithm. A longer key length of a security algorithm indicates higher algorithm strength of the security algorithm. For example, if the key length of the security algorithm 1 is 256 bits, and the key length of the security algorithm 2 is 128 bits, then algorithm strength of the security algorithm 1 is higher than (or stronger than) algorithm strength of the security algorithm 2. In this application, the key length of a security algorithm may be referred to as the protection strength of the security algorithm or the algorithm strength of the security algorithm. Further, the key length of a security algorithm is, for example, 512 bits, 256 bits, or 128 bits, and security algorithms may be further classified based on the key length. In other words, security algorithms corresponding to a key length of 512 bits are a category, security algorithms corresponding to a key length of 256 bits are a category, and security algorithms corresponding to a key length of 128 bits are a category. The key length of a security algorithm may also be referred to as a category, a classification, or the like of the security algorithm. Further, the key length of a security algorithm may also be referred to as a key length used by the security algorithm, an input key length of the security algorithm, a key length corresponding to (or associated with) the security algorithm, or the like.

In a first communication method, the master node selects, based on a key length of a first security algorithm, a secondary node that supports the key length of the first security algorithm, and requests to add the secondary node. The first security algorithm is a security algorithm used to protect data transmitted between the master node and the terminal device. The secondary node determines a second security algorithm used to protect data transmitted between the secondary node and the terminal device.

In a second communication method, the master node selects the secondary node based on a security algorithm supported by the master node, and requests to add the secondary node. A key length of a security algorithm supported by the secondary node is not less than a maximum key length of the security algorithm supported by the master node. The secondary node determines a second security algorithm used to protect data transmitted between the secondary node and the terminal device.

In a third communication method, the master node first determines the secondary node, and determines, based on information about a security algorithm supported by the secondary node, a first security algorithm used to protect data transmitted between the master node and the terminal device, where the information about the security algorithm supported by the secondary node includes information about a key length of the security algorithm supported by the secondary node and/or an identifier of the security algorithm supported by the secondary node. Then, the master node requests to add the secondary node. The secondary node determines a second security algorithm used to protect data transmitted between the secondary node and the terminal device.

In a fourth communication method, the master node first determines the secondary node, and determines a first security algorithm and a second security algorithm based on information about a security algorithm supported by the secondary node. The first security algorithm is a security algorithm used to protect data transmitted between the master node and the terminal device, the second security algorithm is a security algorithm used to protect data transmitted between the secondary node and the terminal device, and the information about the security algorithm supported by the secondary node includes an identifier of the security algorithm supported by the secondary node (or an identifier of the security algorithm supported by the secondary node and a key length of the security algorithm supported by the secondary node). Then, the master node requests to add the secondary node and sends an identifier of the second security algorithm to the secondary node.

In a fifth communication method, the master node first determines a first security algorithm, where the first security algorithm is a security algorithm used to protect data transmitted between the master node and the terminal device. The master node selects a secondary node (denoted as a secondary node 1), and requests to add the secondary node 1. The secondary node 1 may determine that a security algorithm having a same length as the first security algorithm is not supported, and therefore sends, to the master node, an indication indicating that the secondary node 1 fails to be added. Further, the master node reselects a secondary node (denoted as a secondary node 2), and requests to add the secondary node 2. The secondary node 2 may determine that the security algorithm having a same length as the first security algorithm is supported, and sends, to the master node, an indication indicating that the secondary node 2 is successfully added.

The following describes the five communication methods in detail.

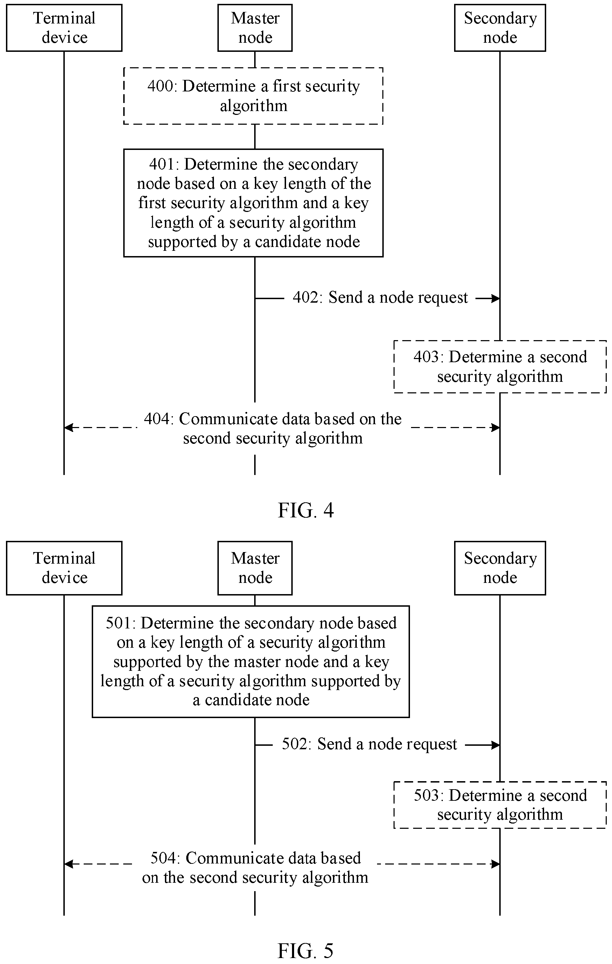

FIG. 4 is an example schematic flowchart of the first communication method according to this application.

Step 401: The master node determines the secondary node based on the key length of the first security algorithm and a key length of a security algorithm supported by a candidate node.

The candidate node includes the secondary node. When there is one candidate node, the master node may determine whether the candidate node can be used as the secondary node. When there are a plurality of candidate nodes, the master node may select the secondary node from the plurality of candidate nodes. For ease of description, the following uses the latter case as an example for description.

A key length of a security algorithm supported by the secondary node is not less than the key length of the first security algorithm. The first security algorithm is a security algorithm used to protect data transmitted between the master node and the terminal device.

When determining the secondary node, the master node may use, as the secondary node, a candidate node whose supported security algorithm meets the following condition 1 or condition 2. In other words, a security algorithm supported by the secondary node may meet the following condition 1 or condition 2.

Condition 1: A second key length is not less than the key length of the first security algorithm, where the second key length is a maximum key length of the security algorithm supported by the secondary node. For example, the second key length is equal to the key length of the first security algorithm.

It may be considered herein that when a key length of a security algorithm supported by a node (the master node/the secondary node) includes a key length 1, the key length of the security algorithm supported by the node also includes a key length 2, where the key length 1 is greater than (or referred to as greater than) the key length 2. For example, if the key length of the security algorithm supported by the node includes 256 bits, the key length of the security algorithm supported by the node also includes 128 bits.

For example, security algorithms supported by the master node include a security algorithm 1 to a security algorithm 3, a key length of the security algorithm 1 is 256 bits, and key lengths of the security algorithm 2 and the security algorithm 3 are both 128 bits. The plurality of candidate nodes include a candidate node 1 to a candidate node 3. A maximum key length of a security algorithm supported by the candidate node 1 is 256 bits, and maximum key lengths of security algorithms supported by the candidate node 2 and the candidate node 3 are 128 bits. When the master node determines that the first security algorithm is the security algorithm 1, the master node may select the candidate node 1 as the secondary node. When the master node determines that the first security algorithm is the security algorithm 2, the master node may select any one of the candidate node 1 to the candidate node 3 as the secondary node.

Condition 2: The key length of the security algorithm supported by the secondary node includes the key length of the first security algorithm.

For example, security algorithms supported by the master node include a security algorithm 1 to a security algorithm 3, a key length of the security algorithm 1 is 256 bits, and key lengths of the security algorithm 2 and the security algorithm 3 are both 128 bits. The plurality of candidate nodes include a candidate node 1 to a candidate node 3. A key length of a security algorithm supported by the candidate node 1 is 256 bits, a key length of a security algorithm supported by the candidate node 2 is 128 bits, and key lengths of security algorithms supported by the candidate node 3 are 256 bits and 128 bits. When the master node determines that the first security algorithm is the security algorithm 1, the master node may select the candidate node 1 or the candidate node 3 as the secondary node. When the master node determines that the first security algorithm is the security algorithm 2, the master node may select the candidate node 2 or the candidate node 3 as the secondary node.

In the foregoing condition 1 and condition 2, logic for selecting the secondary node by the master node is similar. The following uses the condition 1 as an example for description.

Further, before step 401, the master node may obtain information about the key length of the security algorithm supported by the candidate node.

For example, the candidate node may support a plurality of security algorithms, the plurality of security algorithms may correspond to a plurality of key lengths, and one key length may correspond to one or more security algorithms. Alternatively, it is understood that the candidate node may support the plurality of key lengths.

The information about the key length of the security algorithm supported by the candidate node may be identifiers of the plurality of key lengths of the plurality of security algorithms supported by the candidate node (which may be referred to as identifiers of the plurality of key lengths supported by the candidate node for short). For example, the key length of the security algorithm 1 is 256 bits, and the key lengths of the security algorithm 2 and the security algorithm 3 are both 128 bits. If the candidate node supports the security algorithm 1 to the security algorithm 3, the information about the key length of the security algorithm supported by the candidate node is 256 bits and 128 bits.

Alternatively, the information about the key length of the security algorithm supported by the candidate node may be an identifier of a maximum key length in the plurality of key lengths supported by the candidate node (which may be referred to as an identifier of a maximum key length supported by the candidate node for short). For example, the key length of the security algorithm 1 is 256 bits, and the key lengths of the security algorithm 2 and the security algorithm 3 are both 128 bits. If the candidate node supports the security algorithm 1 to the security algorithm 3, the information about the key length of the security algorithm supported by the candidate node is 256 bits.

Alternatively, the information about the key length of the security algorithm supported by the candidate node may be an indication indicating whether the candidate node supports a preset key length. For example, the indication may occupy one bit. When a value of the indication is 1, it indicates that the candidate node supports the preset key length. When a value of the indication is 0, it indicates that the candidate node does not support the preset key length. The preset key length may be 256 bits or 128 bits. For example, the preset key length is 256 bits, the key length of the security algorithm 1 is 256 bits, and the key lengths of the security algorithm 2 and the security algorithm 3 are both 128 bits. If the candidate node supports the security algorithm 1 to the security algorithm 3, the information about the key length of the security algorithm supported by the candidate node is an indication whose value is 1; or if the candidate node supports only the security algorithm 3, the information about the key length of the security algorithm supported by the candidate node is an indication whose value is 0.

It should be noted that when the candidate node supports only one security algorithm, or when the plurality of security algorithms supported by the candidate node correspond to a same key length, "an identifier of a key length supported by the candidate node" is equivalent to "an identifier of a maximum key length supported by the candidate node". In this case, the identifier of the maximum key length supported by the candidate node is used as an example for description. This description also applies to other embodiments.

In addition, in this application, the information about the key length of the security algorithm supported by the candidate node may alternatively be identifiers of the plurality of security algorithms supported by the candidate node. An identifier of each security algorithm includes an identifier of a key length of the security algorithm. For example, the identifier of the security algorithm is "128-NEA2", where the key length is 128 bits, and NEA2 indicates a SNOW3G encryption algorithm.

In this application, the identifier of a key length may be a specific value (for example, 256 bits or 128 bits) of the key length, and may alternatively be another pre-agreed identifier used to indicate the key length. For example, the identifier of a key length is an identifier A or an identifier B, where the identifier A indicates 256 bits, and the identifier B indicates 128 bits. For another example, the identifier of a key length is a value of a preset bit, where a value of the preset bit being 1 indicates 256 bits, and a value of the preset bit being 0 indicates 128 bits. The following uses specific values of the key lengths as an example for description.

The master node may obtain, in the following obtaining manner 1 or obtaining manner 2, the information about the key length of the security algorithm supported by the candidate node.

Obtaining manner 1: The information about the key length of the security algorithm supported by the candidate node is preconfigured in the master node.

Alternatively, it is understood that the master node includes preconfigured information, and the preconfigured information includes an identifier of the candidate node and the information about the key length of the security algorithm supported by the candidate node. For example, the information about the key length of the security algorithm supported by the candidate node is the identifier of the maximum key length supported by the candidate node, the candidate nodes are the candidate node 1 to the candidate node 3, a maximum key length supported by the candidate node 1 is 256 bits, a maximum key length supported by the candidate node 2 is 256 bits, and a maximum key length supported by the candidate node 3 is 128 bits. In this case, the preconfigured information may include the following correspondences: (an identifier of the candidate node 1 and 256 bits), (an identifier of the candidate node 2 and 256 bits), and (an identifier of the candidate node 3 and 128 bits).

For example, the preconfigured information is specifically configured by a management device (for example, an AMF, an operations, administration, and maintenance (operations, administration, and maintenance, OAM) system, or an equipment management system (equipment management system, EMS)) or is manually configured. The candidate node may meet one or more of the following conditions: The master node and the candidate node belong to a same public land mobile network (public land mobile network, PLMN), the master node and the candidate node are located within a same physical area, signal coverage areas of the master node and the candidate node overlap, or frequencies of the master node and the candidate node do not interfere with each other.

Obtaining manner 2: The master node obtains, from the candidate node, the information about the key length of the security algorithm supported by the candidate node.

For example, the master node includes preconfigured information, and the preconfigured information includes an identifier of the candidate node. The identifier of the candidate node is specifically configured by a management device (for example, an AMF, an OAM system, or an EMS) or is manually configured. For a definition of the candidate node, refer to the description in the obtaining manner 1.

The identifier of the candidate node is, for example, a device identifier of the candidate node, an internet protocol (internet protocol, IP) address of the candidate node, or a port (port) number of the candidate node.

For example, the master node sends a security capability request to each candidate node based on the identifier of the candidate node, where the security capability request is used to request information about the key length of the security algorithm supported by the candidate node. Correspondingly, the candidate node sends, to the master node in response to the security capability request, the information about the key length of the security algorithm supported by the candidate node.

It should be further noted that in this embodiment of this application, the master node may further obtain node information of the candidate node (for example, one or more of a product serial number of the candidate node, a communication standard of the candidate node, or a deployment date of the candidate node) through the obtaining manner 1 or the obtaining manner 2. Further, the master node determines, based on the node information of the candidate node, the information about the key length of the security algorithm supported by the candidate node.

For example, the node information of the candidate node is the deployment date of the candidate node, and a preset rule in the master node is that "a candidate node deployed on January 1, 2024 or before January 1, 2024 supports a maximum key length of 128 bits, a candidate node deployed after January 1, 2024 supports a maximum key length of 256 bits". If the deployment date of a candidate node is March 1, 2024, the master node may determine that the maximum key length supported by the candidate node is 256 bits.

For another example, the node information of the candidate node is the communication standard of the candidate node, and a preset rule in the master node is that "a candidate node using a communication standard below 5G supports a maximum key length of 128 bits, and a candidate node using a 5G communication standard or above supports a maximum key length of 256 bits". If the communication standard of a candidate node is 5.5G, the master node may determine that the maximum key length supported by the candidate node is 256 bits.

It should be further noted that when selecting the secondary node from the candidate nodes, the master node may consider the key length of the security algorithm supported by the candidate node, and may also consider at least one or more of the following: signal strength of the candidate node received by the terminal device, usage status of an air interface resource of the candidate node, or a priority of the candidate node.

For example, the master node may further send a measurement instruction to the terminal device based on the identifier of the candidate node, where the measurement instruction includes the identifier of the candidate node, and the measurement instruction instructs the terminal device to measure the signal strength of the candidate node. Correspondingly, the terminal device receives the measurement indication, measures the signal strength of the candidate node based on the identifier of the candidate node in the measurement indication, and sends a measurement result to the master node. The measurement result includes the signal strength of the candidate node. The master node selects the secondary node from the candidate nodes based on the signal strength of the candidate node, the usage status of the air interface resource of the candidate node, and the information about the key length of the security algorithm supported by the candidate node.

For another example, the preconfigured information of the master node further includes the priority of the candidate node. The master node selects the secondary node from the candidate nodes based on the priority of the candidate node and the information about the key length of the security algorithm supported by the candidate node.

Optionally, before the master node determines the secondary node based on the key length of the first security algorithm and the key length of the security algorithm supported by the candidate node, the method may further include step 400: The master node determines (or selects) the first security algorithm.

Specifically, the master node selects, based on priorities of the security algorithms supported by the master node and security algorithms supported by the terminal device, the first security algorithm from the security algorithms supported by the master node. For example, the master node selects, as the first security algorithm, a security algorithm that is supported by both the master node and the terminal device and has a high priority. For example, the master node supports the security algorithm 1 to the security algorithm 3, and priorities of the security algorithm 1 to the security algorithm 3 are: the security algorithm 1, the security algorithm 2, and the security algorithm 3. If the terminal device supports the security algorithm 1 and the security algorithm 2, the master node may determine that the first security algorithm is the security algorithm 1.

For example, the master node may further first obtain the security algorithms supported by the terminal device. For example, when the terminal device sends a registration request to the AMF, the registration request carries the security algorithms supported by the terminal device. Further, the AMF sends the security algorithms supported by the terminal device to the master node. For another example, the master node is a target node in Xn handover, and the master node receives the security algorithms supported by the terminal device from a source node. For another example, the master node is a target node in N2 handover, and the master node receives the security algorithms supported by the terminal device from a target AMF.

Step 402: The master node sends a node request to the secondary node, and correspondingly, the secondary node receives the node request from the master node.

The node request is used to request to add the secondary node. Alternatively, it is understood that the node request is used to request a node that receives the node request to serve as a secondary node corresponding to the master node. For example, a node 1 receives the node request, and the node request is used to request the node 1 to serve as the secondary node corresponding to the master node. Alternatively, it may be understood that the node request is used to request a node that receives the node request to serve as a secondary node for a URLLC service of the terminal device. For example, a node 1 receives the node request, and the node request is used to request the node 1 to serve as the secondary node for the URLLC service of the terminal device.

In a possible manner, the node request includes the information about the key length of the first security algorithm. The information about the key length of the first security algorithm may be used by the secondary node to determine (or select) the second security algorithm. The second security algorithm is a security algorithm used to protect data transmitted between the secondary node and the terminal device. For details, refer to the descriptions in step 403 and step 404.

For example, the information about the key length of the first security algorithm may be an identifier of the key length of the first security algorithm. For example, if the key length of the first security algorithm is 256 bits, the information about the key length of the first security algorithm is 256 bits.

For another example, the information about the key length of the first security algorithm may be an indication indicating whether the key length of the first security algorithm is the preset key length. The indication may occupy one bit. When a value of the indication is 1, it indicates that the key length of the first security algorithm is the preset key length. When a value of the indication is 0, it indicates that the key length of the first security algorithm is not the preset key length. For example, the preset key length is 256 bits. If the key length of the first security algorithm is 256 bits, the information about the key length of the first security algorithm is an indication with a value of 1; or if the key length of the first security algorithm is 128 bits, the information about the key length of the first security algorithm is an indication with a value of 0.

Optionally, the node request may further include the security algorithms supported by the terminal device, and the security algorithms supported by the terminal device are used by the secondary node to select the second security algorithm. For details, refer to the description in step 403. Optionally, the node request may further include a node key (for example, a gNB key) of the secondary node. The node key of the secondary node is used by the secondary node to derive a user plane key of the secondary node. For details, refer to the description in step 404. For example, the master node derives the node key of the secondary node based on a node key of the master node, and adds the node key of the secondary node to the node request.

Optionally, the implementation related to FIG. 4 further includes the following step 403 and step 404.

Step 403: The secondary node determines the second security algorithm.

The second security algorithm is a security algorithm used to protect data transmitted between the secondary node and the terminal device.

In a possible manner, the node request includes the information about the key length of the first security algorithm. After receiving the node request, the secondary node obtains the information about the key length of the first security algorithm from the node request, and selects, based on the information about the key length of the first security algorithm, the second security algorithm from the security algorithms supported by the secondary node. A key length of the second security algorithm is equal to the key length of the first security algorithm, and an identifier of the second security algorithm is the same as or different from an identifier of the first security algorithm.

In a possible example, after receiving the node request, the secondary node may further obtain the security algorithms supported by the terminal device from the node request, and determine the second security algorithm from the security algorithm supported by the secondary node based on the information about the key length of the first security algorithm, the security algorithms supported by the terminal device, and priorities of the security algorithms supported by the secondary node. It may be understood that the key length of the second security algorithm is the same as the key length of the first security algorithm, and the second security algorithm also needs to be supported by the terminal device. In other words, the security algorithms supported by the terminal device include the second security algorithm, and the second security algorithm is a security algorithm with a high priority among a plurality of security algorithms supported by the secondary node.

For example, the terminal device supports the security algorithm 1 to the security algorithm 3. The key length of the security algorithm 1 is 256 bits, and the key lengths of the security algorithms 2 and 3 are both 128 bits. The master node determines that the first security algorithm is the security algorithm 1, and the node request sent to the secondary node includes the key length of the first security algorithm (namely, 256 bits) and identifiers of the security algorithm 1 to the security algorithm 3 supported by the terminal device. Correspondingly, the secondary node supports the security algorithm 1 to a security algorithm 4, and priorities of the security algorithms set in the secondary node are: the security algorithm 1, the security algorithm 4, the security algorithm 2, and the security algorithm 3. A key length of the security algorithm 4 is 256 bits. The secondary node obtains, from the node request, the key length of the first security algorithm (namely, 256 bits) and the identifiers of the security algorithm 1 to the security algorithm 3 supported by the terminal device, and determines that the second security algorithm is the security algorithm 1.

It should be noted that when maximum key lengths supported by the master node and the secondary node are the same, and the master node and the secondary node determine, through pre-negotiation, to select a security algorithm corresponding to the maximum key length as the security algorithm for communication with the terminal device, the node request may not need to carry information about the key length of the first security algorithm. For example, the master node supports the security algorithm 1 to the security algorithm 3, the secondary node supports the security algorithm 1 and the security algorithm 2, and the terminal device supports the security algorithm 1 and the security algorithm 2. The key length of the security algorithm 1 is 256 bits, and the key lengths of the security algorithm 2 and the security algorithm 3 are both 128 bits. The master node may determine, as the first security algorithm, the security algorithm corresponding to the maximum key length supported by the master node, namely, the security algorithm 1, and send the node request to the secondary node. The node request may not need to carry information about the key length of the first security algorithm. Correspondingly, the secondary node may determine, as the second security algorithm, the security algorithm corresponding to the maximum key length supported by the secondary node, namely, the security algorithm 1. Certainly, there may be another case in which the node request does not need to carry the information about the key length of the first security algorithm. Details are not described in this application.

Step 404: The secondary node communicates data with the terminal device based on the second security algorithm.

Before step 404, the secondary node may further send a node response to the master node, where the node response indicates that the secondary node is successfully added. For example, the node response includes a success indication (for example, an acknowledgment (acknowledgment, ACK)), and the success indication indicates that the secondary node is successfully added. For example, the node response further includes the identifier of the second security algorithm. After receiving the node response, the master node obtains the identifier of the second security algorithm from the node response, and sends the identifier of the second security algorithm to the terminal device. In this way, the terminal device obtains the identifier of the second security algorithm. For example, the identifier of the second security algorithm is carried in an RRC connection reconfiguration message sent by the master node to the terminal device.

For example, the node request is specifically a secondary node addition request (SN addition request), and the node response is specifically a secondary node addition acknowledgment (SN addition acknowledge); or the node request is specifically a secondary node modification request (SN modification request), and the node response is specifically a secondary node addition acknowledgment (SN modification acknowledge).

Before step 404, the secondary node may obtain the node key of the secondary node from the node request, and derive the user plane key of the secondary node based on the node key of the secondary node. The user plane key of the secondary node may be a user plane encryption key or a user plane integrity protection key, or include a user plane encryption key and a user plane integrity protection key, or may be a key of an AEAD algorithm used for user plane protection. The AEAD algorithm is used for both data integrity protection and data encryption protection.

The secondary node communicating data with the terminal device based on the second security algorithm may be specifically that the secondary node communicates the data with the terminal device based on the second security algorithm and the user plane key of the secondary node.

When the secondary node needs to send first data to the terminal device, the secondary node inputs the user plane key of the secondary node and the first data into the second security algorithm, to obtain second data, and sends the second data to the terminal device. Correspondingly, the terminal device receives the second data from the secondary node, and inputs the second data and a user plane key of the terminal device into the second security algorithm, to obtain the first data.

When the terminal device needs to send first data to the secondary node, the terminal device inputs a user plane key of the terminal device and the first data into the second security algorithm, to obtain second data, and sends the second data to the secondary node. Correspondingly, the secondary node receives the second data from the terminal device, and inputs the second data and the user plane key of the secondary node into the second security algorithm, to obtain the first data.

The user plane key of the terminal device and the user plane key of the secondary node are mutually symmetric keys.

It should be noted that, with reference to the 5G key derivation architecture shown in FIG. 2, lengths of the CK and the IK are generally 128 bits, and the concatenation result of the CK and the IK is 256 bits. The AUSF key, the SEAF key, the AMF key, the NAS key, the gNB key, the RRC key, and the user plane key that are sequentially derived by the terminal device (or the network side) are all 256 bits. When a node (for example, the master node or the secondary node) communicates data with the terminal device, if a key length of a security algorithm determined by the node and the terminal device through negotiation is 256 bits, the node and the terminal device may use the 256-bit user plane key for transmission protection; or if a key length of a security algorithm determined by the node and the terminal device through negotiation is 128 bits, the node and the terminal device may each truncate the 256-bit user plane key to obtain a 128-bit user plane key and then use the 128-bit user plane key for transmission protection.

In the embodiment related to FIG. 4, the master node first determines the first security algorithm, where the first security algorithm is a security algorithm used to protect data transmitted between the master node and the terminal device. Then, the master node selects the secondary node based on the key length of the first security algorithm, and requests to add the secondary node. This makes selection of the secondary node more reasonable and facilitates subsequent selection of an appropriate security algorithm by the secondary node. Specifically, the selected secondary node can meet the following condition: The master node and the secondary node each can determine an appropriate security algorithm, so that security strength of data transmitted between the master node and the terminal device matches security strength of data transmitted between the secondary node and the terminal device, thereby meeting requirements for secure communication. For example, the secondary node selected according to the solution of this application can enable the security algorithms respectively selected by the master node and the secondary node to have a same key length. In a scenario in which the terminal device uses a redundant data transmission service, two mutually redundant PDU sessions of the terminal device are used for transmission of same service data, and data corresponding to the two PDU sessions is respectively protected by the master node and the secondary node by using the respectively selected security algorithms. The key lengths of the two security algorithms are the same, which meets a security assumption of redundant data transmission.

FIG. 5 is an example schematic flowchart of the second communication method according to this application.

Step 501: The master node determines the secondary node based on the key length of the security algorithm supported by the master node and a key length of a security algorithm supported by a candidate node.

The candidate node includes the secondary node. When there is one candidate node, the master node may determine whether the candidate node can be used as the secondary node. When there are a plurality of candidate nodes, the master node may select the secondary node from the plurality of candidate nodes. For ease of description, the following uses the latter case as an example for description.

When determining the secondary node, the master node may use, as the secondary node, a candidate node whose supported security algorithm meets the following condition (1) or condition (2). In other words, a security algorithm supported by the secondary node may meet the following condition (1) or condition (2).

Condition (1): A maximum key length of the security algorithm supported by the secondary node is not less than the maximum key length of the security algorithm supported by the master node.

For example, the maximum key length of the security algorithm supported by the secondary node is equal to the maximum key length of the security algorithm supported by the master node.

In this application, the maximum key length of the security algorithm supported by the master node may be referred to as a first key length, and the maximum key length of the security algorithm supported by the secondary node may be referred to as a second key length.

It may be considered herein that when a key length of a security algorithm supported by a node (the master node/the secondary node) includes a key length 1, the key length of the security algorithm supported by the node also includes a key length 2, where the key length 1 is greater than the key length 2. For example, if the key length of the security algorithm supported by the node includes 256 bits, the key length of the security algorithm supported by the node also includes 128 bits.

For example, security algorithms supported by the master node include a security algorithm 1 to a security algorithm 3, a key length of the security algorithm 1 is 256 bits, and key lengths of the security algorithm 2 and the security algorithm 3 are both 128 bits. The plurality of candidate nodes include a candidate node 1 to a candidate node 3. A maximum key length of a security algorithm supported by the candidate node 1 is 256 bits, and maximum key lengths of security algorithms supported by the candidate node 2 and the candidate node 3 are 128 bits. The master node may determine, based on the key lengths of the security algorithm 1 to the security algorithm 3, that the first key length is 256 bits, so that the master node selects the candidate node 1 from the candidate node 1 to the candidate node 3 as the secondary node.

Condition (2): The key length of the security algorithm supported by the secondary node includes the key length of the security algorithm supported by the master node.

For example, security algorithms supported by the master node include a security algorithm 1 to a security algorithm 3, a key length of the security algorithm 1 is 256 bits, and key lengths of the security algorithm 2 and the security algorithm 3 are both 128 bits. The plurality of candidate nodes include a candidate node 1 to a candidate node 3. A key length of a security algorithm supported by the candidate node 1 is 256 bits, a key length of a security algorithm supported by the candidate node 2 is 128 bits, and key lengths of security algorithms supported by the candidate node 3 are 256 bits and 128 bits. The master node may select the candidate node 3 from the candidate node 1 to the candidate node 3 as the secondary node based on the key lengths of the security algorithm 1 to the security algorithm 3.

In the condition (1) and the condition (2), logic for selecting the secondary node by the master node is similar. The following uses the condition (1) as an example for description.

Further, before step 501, the master node may obtain information about the key length of the security algorithm supported by the candidate node. For details about the description of the information about the key length of the security algorithm supported by the candidate node and a manner in which the master node obtains the information about the key length of the security algorithm supported by the candidate node, refer to the description in step 401.

Step 502: The master node sends a node request to the secondary node, and correspondingly, the secondary node receives the node request from the master node.

The node request is used to request to add the secondary node. For a specific description, refer to the description in step 402.

In a possible manner, the node request includes the information about the key length of the first security algorithm. For a function and a representation form of the information about the key length of the first security algorithm, refer to the description in step 402.

Optionally, before the master node sends the node request to the secondary node, the master node may first select the first security algorithm from the security algorithms supported by the master node. Specifically, the master node selects, based on priorities of the security algorithms supported by the master node and security algorithms supported by the terminal device, the first security algorithm from the security algorithms supported by the master node. For a specific description, refer to the description in step 400.

For content not described in detail in step 502, refer to the description in step 402.

Optionally, the implementation related to FIG. 5 further includes the following step 503 and step 504.

Step 503: The secondary node determines the second security algorithm. The second security algorithm is a security algorithm used to protect data transmitted between the secondary node and the terminal device. For details, refer to the description in step 403.

Step 504: The secondary node communicates data with the terminal device based on the second security algorithm. For details, refer to the description in step 404.

In the embodiment related to FIG. 5, the master node selects the secondary node based on the security algorithms supported by the master node, and then requests to add the secondary node. This makes selection of the secondary node more reasonable and facilitates subsequent selection of an appropriate security algorithm by the secondary node. Specifically, the selected secondary node can meet the following condition: The master node and the secondary node each can determine an appropriate security algorithm, so that security strength of data transmitted between the master node and the terminal device matches security strength of data transmitted between the secondary node and the terminal device, thereby meeting requirements for secure communication. For example, the secondary node selected according to the solution of this application can enable the security algorithms respectively selected by the master node and the secondary node to have a same key length.

Further, in a scenario in which the terminal device uses a redundant data transmission service, two mutually redundant PDU sessions of the terminal device are used for transmission of same service data, and data corresponding to the two PDU sessions is respectively protected by the master node and the secondary node by using the respectively selected security algorithms. The key lengths of the two security algorithms are the same, which meets a security assumption of redundant data transmission.

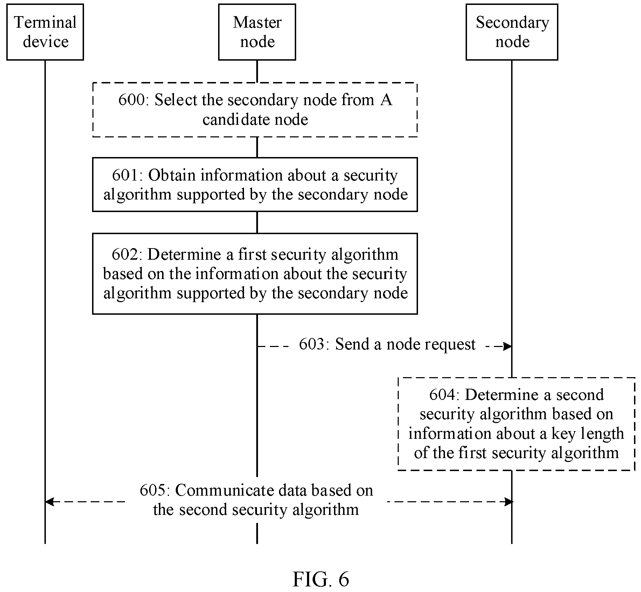

FIG. 6 is an example schematic flowchart of the third communication method according to this application.

Step 601: The master node obtains the information about the security algorithm supported by the secondary node.

The information about the security algorithm includes information about the key length of the security algorithm and/or the identifier of the security algorithm. In other words, the master node obtains the information about the key length of the security algorithm supported by the secondary node, and/or the master node obtains the identifier of the security algorithm supported by the secondary node.

The information about the key length of the security algorithm supported by the secondary node may be identifiers of a plurality of key lengths supported by the secondary node, an identifier of a maximum key length supported by the secondary node, or an indication of whether the secondary node supports a preset key length. The secondary node is one in a candidate node. For information about the key length of the security algorithm supported by the secondary node, refer to the description in step 401.

The identifier of the security algorithm supported by the secondary node may be specifically identifiers of one or more security algorithms supported by the secondary node. For example, if the secondary node supports a security algorithm 1 to a security algorithm 3, and identifiers of the security algorithm 1 to the security algorithm 3 are respectively an identifier 1 to an identifier 3, then the identifiers of the security algorithms supported by the secondary node include the identifier 1 to the identifier 3.

Optionally, before the master node obtains the information about the security algorithm supported by the secondary node, the method may further include the following step 600.

Step 600: The master node selects the secondary node from the candidate node.

For a definition of the candidate node, refer to the description in the obtaining manner 1 in step 401.

The master node may specifically select the secondary node from the candidate node based on at least one or more of the following: signal strength of the candidate node received by the terminal device, usage status of an air interface resource of the candidate node, or a priority of the candidate node.

The following provides two examples in which the master node selects the secondary node from the candidate node:
Example (1): An identifier of the candidate node is preconfigured in the master node. The master node sends a measurement instruction to the terminal device based on the identifier of the candidate node, where the measurement instruction includes the identifier of the candidate node, and the measurement instruction instructs the terminal device to measure the signal strength of the candidate node. Correspondingly, the terminal device receives the measurement indication, measures the signal strength of the candidate node based on the identifier of the candidate node in the measurement indication, and sends a measurement result to the master node. The measurement result includes the signal strength of the candidate node. The master node selects the secondary node from the candidate node based on the signal strength of the candidate node and the usage status of the air interface resource of the candidate node.
Example (2): An identifier and a priority of the candidate node are preconfigured in the master node. The master node may select the secondary node from the candidate node based on the priority of the candidate node and the usage status of the air interface resource of the candidate node.

For example, the master node includes preconfigured information, and the preconfigured information includes the identifier of the candidate node, or includes the identifier and the priority of the candidate node. The preconfigured information may be configured by a management device (for example, an AMF, an OAM system, or an EMS) or manually configured. The usage status of the air interface resource of the candidate node may be requested by the master node from the candidate node.

Further, the master node may obtain, in the following obtaining manner (1) or obtaining manner (2), the information about the security algorithm supported by the secondary node.

Obtaining manner (1): The information about the security algorithm supported by the secondary node is preconfigured in the master node.

For example, the preconfigured information further includes information about the security algorithm supported by the candidate node (that is, the preconfigured information includes the information about the security algorithm supported by the secondary node). For example, the master node obtains, from the preconfigured information based on an identifier of the secondary node, the information about the security algorithm supported by the secondary node. For example, the candidate nodes are a candidate node 1 to a candidate node 5, and the preconfigured information includes identifiers of the candidate node 1 to the candidate node 5, and information 1 about a security algorithm supported by the candidate node 1 to information 5 about a security algorithm supported by the candidate node 5. When selecting the candidate node 2 as the secondary node, the master node further determines that the information about the security algorithm supported by the secondary node is the information 2 of the security algorithm.

Obtaining manner (2): The master node obtains, from the secondary node, the information about the security algorithm supported by the secondary node. For example, the master node sends a security capability request to the secondary node based on an identifier of the secondary node, where the security capability request is used to request the information about the security algorithm supported by the secondary node. Correspondingly, the secondary node sends, to the master node in response to the security capability request, the information about the security algorithm supported by the secondary node.

Step 602: The master node determines the first security algorithm based on the information about the security algorithm supported by the secondary node, where the first security algorithm is a security algorithm used to protect data transmitted between the master node and the terminal device.

In a specific implementation, the master node selects, based on the information about the security algorithm supported by the secondary node and information about security algorithms supported by the master node, the first security algorithm from the security algorithms supported by the master node.

The information about the security algorithms supported by the master node includes one or more of the following: identifiers of a plurality of key lengths supported by the master node, an identifier of a maximum key length supported by the master node (namely, an identifier of a first key length), an indication indicating whether the master node supports a preset key length, identifiers of the security algorithms supported by the master node, or priorities of the security algorithms supported by the master node.

For example, the information about the security algorithms supported by the master node is specifically a priority list of the security algorithms supported by the master node, and the priority list of the security algorithms supported by the master node includes identifiers and priorities of a plurality of security algorithms supported by the master node. The identifier of the security algorithm supported by the master node includes a key length of the security algorithm. For example, the identifier of the security algorithm is "128-NEA2", where the key length is 128, and NEA2 indicates a SNOW3G encryption algorithm.

Further, content included in the information about the security algorithm supported by the secondary node is described in different cases.

Case 1: When the information about the security algorithm supported by the secondary node includes the information about the key length of the security algorithm supported by the secondary node, the master node specifically determines the first security algorithm based on the information about the key length of the security algorithm supported by the secondary node and the information about the security algorithm supported by the master node.

Example (1): The master node determines a second key length based on the information about the key length of the security algorithm supported by the secondary node. The master node further determines a smaller key length between the first key length and the second key length, and selects, from the security algorithms supported by the master node based on the smaller key length, security algorithms supported by the terminal device, and the priorities of the security algorithms supported by the master node, a security algorithm having a key length less than (or referred to as less than) or equal to the smaller key length as the first security algorithm. The first key length is a maximum key length of the security algorithm supported by the master node, and the second key length is a maximum key length of the security algorithm supported by the secondary node.

Specifically, when the master node determines that the first key length is greater than the second key length, the master node may select, from the security algorithms supported by the master node based on the security algorithms supported by the terminal device and the priorities of the security algorithms supported by the master node, a security algorithm having a key length less than or equal to the second key length as the first security algorithm.

For example, the second key length is 128 bits, the master node supports the security algorithm 1 to the security algorithm 3, and priorities of the security algorithm 1 to the security algorithm 3 are: the security algorithm 1, the security algorithm 2, and the security algorithm 3. The terminal device supports the security algorithm 1 to the security algorithm 3. The key length of the security algorithm 1 is 256 bits, and the key lengths of the security algorithms 2 and 3 are both 128 bits. The master node determines that the first key length is 256 bits, and the first key length is greater than the second key length. Therefore, the master node selects the security algorithm 2 as the first security algorithm based on the second key length (namely, 128 bits), the security algorithm 1 to the security algorithm 3 supported by the terminal device, and the priorities of the security algorithm 1 to the security algorithm 3.

When the master node determines that the first key length is less than or equal to the second key length, the master node may select, from the security algorithms supported by the master node based on the security algorithms supported by the terminal device and the priorities of the security algorithms supported by the master node, a security algorithm having a key length less than or equal to the first key length as the first security algorithm.

Still with reference to the foregoing example, the second key length is 256 bits. The master node determines that the first key length is 256 bits, and the first key length is less than or equal to the second key length. Therefore, the master node selects the security algorithm 1 as the first security algorithm based on the first key length (namely, 256 bits), the security algorithm 1 to the security algorithm 3 supported by the terminal device, and the priorities of the security algorithm 1 to the security algorithm 3.

Example (2): The master node preliminarily selects a security algorithm based on the security algorithms supported by the master node, the priorities of the security algorithms supported by the master node, and security algorithms supported by the terminal device. If a key length of the preliminarily selected security algorithm is less than or equal to a second key length, the master node determines the preliminarily selected security algorithm as the first security algorithm. If a key length of the preliminarily selected security algorithm is greater than the second key length, the master node reselects a security algorithm based on the security algorithms supported by the master node, the priorities of the security algorithms supported by the master node, and the security algorithms supported by the terminal device, and determines whether a key length of the reselected security algorithm is less than or equal to the second key length, and so on, until the first security algorithm is determined.

For example, the second key length is 128 bits, the master node supports the security algorithm 1 to the security algorithm 3, and priorities of the security algorithm 1 to the security algorithm 3 are: the security algorithm 1, the security algorithm 2, and the security algorithm 3. The terminal device supports the security algorithm 1 to the security algorithm 3. The key length of the security algorithm 1 is 256 bits, and the key lengths of the security algorithms 2 and 3 are both 128 bits. The master node selects the security algorithm 1 based on the security algorithms supported by the master node, the priorities of the security algorithms supported by the master node, and the security algorithms supported by the terminal device, and determines that the key length of the security algorithm 1 is greater than the second key length. Further, the master node reselects the security algorithm 2 based on a security algorithms supported by the master node, the priorities of the security algorithms supported by the master node, and the security algorithms supported by the terminal device, determines that the key length of the security algorithm 2 is equal to the second key length, and accordingly determines that the security algorithm 2 is the first security algorithm.

Example (3): The master node determines, based on the information about the key length of the security algorithm supported by the secondary node, information about key lengths of security algorithms supported by the master node, and information about key lengths of security algorithms supported by the terminal device, a key length of a security algorithm supported by all the three parties. Further, the master node selects the first security algorithm from the security algorithms supported by the master node based on the key length of the security algorithm supported by all the three parties, the security algorithms supported by the terminal device, and the priorities of the security algorithms supported by the master node. The key length of the first security algorithm is equal to the key length of the security algorithm supported by all the three parties

For example, the master node supports the security algorithm 1 to the security algorithm 3, and priorities of the security algorithm 1 to the security algorithm 3 are: the security algorithm 1, the security algorithm 2, and the security algorithm 3. The terminal device supports the security algorithm 1 to the security algorithm 3. The secondary node supports the security algorithm 1 and a security algorithm 4. The key lengths of the security algorithms 1 and 4 are both 256 bits, and the key lengths of security algorithms 2 and 3 are both 128 bits. In this case, the master node determines, based on the key length of the security algorithm supported by the master node, the key length of the security algorithm supported by the secondary node, and the key lengths of the security algorithms supported by the terminal device, that the key length supported by all the three is 256 bits. Further, the master node determines, based on the key length (namely, 256 bits) supported by all the three, the security algorithm 1 to the security algorithm 3 supported by the terminal device, and the priorities of the security algorithms supported by the master node, that the first security algorithm is the security algorithm 1.

Case 2: When the information about the security algorithm supported by the secondary node includes the identifier of the security algorithm supported by the secondary node, the master node determines, based on the identifier of the security algorithm supported by the secondary node, the information about the key length of the security algorithm supported by the secondary node, and then determines the first security algorithm based on the information about the key length of the security algorithm supported by the secondary node and the information about the security algorithm supported by the master node (for details, refer to the description in the case 1).

Optionally, the implementation related to FIG. 6 further includes the following step 603 to step 605.

Step 603: The master node sends a node request to the secondary node, and correspondingly, the secondary node receives the node request from the master node.

The node request includes information about the key length of the first security algorithm, and the information about the key length of the first security algorithm may be an identifier of the key length of the first security algorithm, or an indication indicating whether the key length of the first security algorithm is a preset key length. The node request is used to request to add the secondary node. For a specific description, refer to the description in step 402.

In a possible manner, the node request further includes the security algorithms supported by the terminal device. Optionally, the node request may further include a node key of the secondary node, and the node key of the secondary node is used by the secondary node to derive a user plane key of the secondary node. For details, refer to the description in step 402.

Step 604: The secondary node determines the second security algorithm based on the information about the key length of the first security algorithm.

Specifically, after receiving the node request, the secondary node obtains the information about the key length of the first security algorithm from the node request, and determines, based on the information about the key length of the first security algorithm, the second security algorithm from the security algorithm supported by the secondary node. The key length of the first security algorithm is the same as a key length of the second security algorithm. For specific implementation, refer to the description of the case 1 in step 403.

Step 605: The secondary node communicates data with the terminal device based on the second security algorithm.

Before step 605, the secondary node may further send a node response to the master node, where the node response indicates that the secondary node is successfully added. For content not described in detail in step 605, refer to the description in step 404.

In the embodiment related to FIG. 6, the master node first determines the secondary node, determines the first security algorithm based on the information about the security algorithm supported by the secondary node, and then requests to add the secondary node based on the information about the key length of the first security algorithm. The master node and the secondary node each can determine an appropriate security algorithm, so that security strength of data transmitted between the master node and the terminal device matches security strength of data transmitted between the secondary node and the terminal device, thereby meeting requirements for secure communication. For example, according to the solution of this application, the first security algorithm selected by the master node and the second security algorithm selected by the secondary node can have a same key length.

Further, in a scenario in which the terminal device uses a redundant data transmission service, two mutually redundant PDU sessions of the terminal device are used for transmission of same service data, and data corresponding to the two PDU sessions is respectively protected by the master node and the secondary node by using the respectively selected security algorithms. The key lengths of the two security algorithms are the same, which meets a security assumption of redundant data transmission.

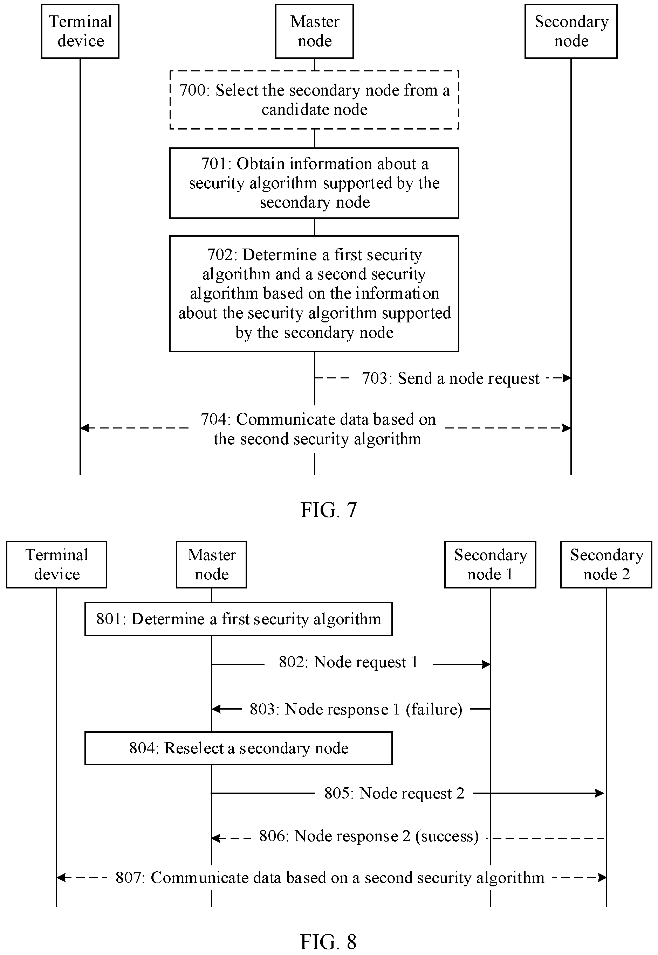

FIG. 7 is an example schematic flowchart of the fourth communication method according to this application.

Step 701: The master node obtains the information about the security algorithm supported by the secondary node. For details, refer to the description in step 601.

Optionally, before the master node obtains the information about the security algorithm supported by the secondary node, the method may further include step 700: The master node selects the secondary node from a candidate node. For details, refer to the description in step 600.

Step 702: The master node determines the first security algorithm and the second security algorithm based on the information about the security algorithm supported by the secondary node.

The first security algorithm is a security algorithm used to protect data transmitted between the master node and the terminal device. The second security algorithm is a security algorithm used to protect data transmitted between the secondary node and the terminal device. A key length of the first security algorithm is equal to a key length of the second security algorithm.

In an example, the information about the security algorithm supported by the secondary node includes the identifier of the security algorithm supported by the secondary node. In this case, the master node determines, based on the identifier of the security algorithm supported by the secondary node, the information about the key length of the security algorithm supported by the secondary node, and then determines the first security algorithm based on the information about the key length of the security algorithm supported by the secondary node and the information about the security algorithm supported by the master node (for details, refer to the description in step 602). Then, the master node determines the second security algorithm based on the key length of the first security algorithm and the identifier of the security algorithm supported by the secondary node.

Optionally, the information about the security algorithm supported by the secondary node further includes information about the key length of the security algorithm supported by the secondary node. In this case, the master node may determine the first security algorithm based on the information about the key length of the security algorithm supported by the secondary node and the information about the security algorithm supported by the master node. Then, the master node determines the second security algorithm based on the key length of the first security algorithm and the identifier of the security algorithm supported by the secondary node.

In still another example, the information about the security algorithm supported by the secondary node includes the identifier of the security algorithm supported by the secondary node. In this case, the master node determines the first security algorithm and the second security algorithm based on the identifier of the security algorithm supported by the secondary node and the information about the security algorithm supported by the master node.

For example, the first security algorithm is the same as the second security algorithm. In other words, the master node selects, based on the identifier of the security algorithm supported by the secondary node and an identifier of the security algorithm supported by the master node, security algorithms having a same identifier as the first security algorithm and the second security algorithm.

For example, the secondary node supports a security algorithm 1 to a security algorithm 4, and information about the security algorithms supported by the secondary node includes identifiers of the security algorithm 1 to the security algorithm 4; and the master node supports the security algorithm 1 to the security algorithm 3, and information about the security algorithms supported by the master node includes identifiers of the security algorithm 1 to the security algorithm 3. The master node may determine, based on the identifiers of the security algorithms supported by the secondary node and the identifiers of the security algorithms supported by the master node, that both the first security algorithm and the second security algorithm are the security algorithm 1, or that both the first security algorithm and the second security algorithm are the security algorithm 2, or the like.

When the secondary node supports a plurality of security algorithms, the information about the security algorithms supported by the secondary node may further include priorities of the plurality of security algorithms supported by the secondary node. Further, the master node may determine the first security algorithm and the second security algorithm based on the identifiers of the plurality of security algorithms supported by the secondary node, the priorities of the plurality of security algorithms supported by the secondary node, and the information about the security algorithm supported by the master node.

With reference to the foregoing example, the information about the security algorithm supported by the secondary node further includes priorities of the security algorithms supported by the secondary node, and the priorities are from the security algorithm 1 to the security algorithm 4. The master node may determine, based on the identifiers of the security algorithms supported by the secondary node, the identifiers of the security algorithms supported by the master node, and the priorities of the security algorithms supported by the secondary node, that both the first security algorithm and the second security algorithm are the security algorithm 1.

In this manner, the master node may further send the identifier of the second security algorithm to the secondary node. Optionally, the identifier of the second security algorithm is included in a node request. Alternatively, the identifier of the second security algorithm is included in another message. For example, the master node first sends a node request to the secondary node, where the node request is used to request to add the secondary node, and then the master node sends the another message to the secondary node, where the another message includes the identifier of the second security algorithm.

Optionally, the implementation related to FIG. 7 further includes the following step 703 to step 704.

Step 703: The master node sends the node request to the secondary node, and correspondingly, the secondary node receives the node request from the master node.

The node request is used to request to add the secondary node. For a specific description, refer to the description in step 402.

Optionally, the node request includes the identifier of the second security algorithm. For example, the node request is further used to instruct the secondary node to communicate data with the terminal device based on the identifier of the second security algorithm that is included in the node request.

Step 704: The secondary node communicates data with the terminal device based on the second security algorithm.

Specifically, after obtaining the identifier of the second security algorithm from the node request, the secondary node directly determines the second security algorithm based on the identifier of the second security algorithm. For example, if the node request includes the identifier of the security algorithm 1, the secondary node may determine that the second security algorithm is the security algorithm 1.

Further, after determining the second security algorithm, the secondary node may further verify that the secondary node and/or the terminal device support/supports the second security algorithm, to communicate data with the terminal device based on the second security algorithm. For example, the secondary node obtains, from the node request, identifiers of the security algorithms supported by the terminal device and the identifier of the second security algorithm, and determines that the security algorithms supported by the terminal device include the second security algorithm.

Before step 704, the secondary node may further send a node response to the master node, where the node response indicates that the secondary node is successfully added. Because the master node already knows the second security algorithm, the node response may not carry the identifier of the second security algorithm, which helps reduce an amount of transmitted data.

In the embodiment related to FIG. 7, the master node determines the first security algorithm and the second security algorithm based on the information about the security algorithm supported by the secondary node, and the master node sends the identifier of the second security algorithm to the secondary node. In this way, the master node can ensure that security strength of data transmitted between the master node and the terminal device matches security strength of data transmitted between the secondary node and the terminal device. For example, the master node can ensure that the key length of the first security algorithm is the same as the key length of the second security algorithm, thereby implementing security of the communication system.

Further, in a scenario in which the terminal device uses a redundant data transmission service, two mutually redundant PDU sessions of the terminal device are used for transmission of same service data, and data corresponding to the two PDU sessions is protected by using the first security algorithm and the second security algorithm respectively. The key lengths of the two security algorithms are the same, which meets a security assumption of redundant data transmission.

FIG. 8 is an example schematic flowchart of the fifth communication method according to this application. For ease of description, a secondary node first selected by the master node may be referred to as the secondary node 1, a node request sent by the master node to the secondary node 1 is referred to as a node request 1, a secondary node selected by the master node later is referred to as the secondary node 2, and a node request sent by the master node to the secondary node 2 is referred to as a node request 2.

Step 801: The master node determines the first security algorithm.

The first security algorithm is a security algorithm used to protect data transmitted between the master node and the terminal device.

Specifically, the master node selects, based on priorities of the security algorithms supported by the master node and security algorithms supported by the terminal device, the first security algorithm from the security algorithms supported by the master node. For a specific example, refer to the description in step 400.

Step 802: The master node sends the node request 1 to the secondary node (namely, the secondary node 1), and correspondingly, the secondary node 1 receives the node request 1 from the master node. The node request 1 is used to request to add the secondary node 1, and the node request 1 includes information about a key length of the first security algorithm.

For example, the information about the key length of the first security algorithm may be an identifier of the key length of the first security algorithm, or an indication indicating whether the key length of the first security algorithm is a preset key length. For details, refer to the description in step 402.

In a possible manner, the key length of the first security algorithm is the preset key length. Alternatively, it is understood that, when it is determined that the key length of the first security algorithm is the preset key length, the master node may carry the information about the key length of the first security algorithm (namely, the preset key length) in the node request 1. For example, the preset key length is 256 bits. If the master node determines that the key length of the first security algorithm is 256 bits, the node request 1 sent to the secondary node 1 includes 256 bits. If the master node determines that the key length of the first security algorithm is 128 bits, the node request 1 sent to the secondary node 1 may not include 128 bits. Alternatively, it may be understood that the master node and the secondary node both support key lengths less than the preset key length by default, but do not necessarily support the preset key length. When it is determined that the key length of the first security algorithm is the preset key length, the master node needs to carry the information about the key length of the first security algorithm in the node request 1. When it is determined that the key length of the first security algorithm is less than the preset key length, the master node may not need to carry the information about the key length of the first security algorithm in the node request 1. This description also applies to another solution in which the node request carries the information about the key length of the first security algorithm, for example, step 402, step 603, and step 805.

Optionally, the master node may select the secondary node 1 from candidate nodes. For specific implementation, refer to the description of step 600.

Optionally, the implementation related to FIG. 8 further includes the following step 803 to step 804.

Step 803: The secondary node 1 sends a node response 1 to the master node, and correspondingly, the master node receives the node response 1 from the secondary node 1.

The node response 1 is a response corresponding to the node request 1.

The node response 1 indicates that the secondary node 1 fails to be added. For example, the node response 1 includes a failure indication (for example, a negative acknowledgment (negative acknowledgment, NACK)), and the failure indication indicates that the secondary node 1 fails to be added.

The following provides three examples in which the secondary node 1 determines to send the node response 1 to the master node.

Example a1: The secondary node 1 obtains the information about the key length of the first security algorithm from the node request 1, and sends the node response 1 to the master node when it is determined, based on the information about the key length of the first security algorithm, that the secondary node 1 does not support the key length of the first security algorithm. For example, if a key length supported by the secondary node 1 is 128 bits, and the information that is about the key length of the first security algorithm and included in the node request 1 is 256 bits, then the secondary node 1 may determine that the secondary node 1 does not support the key length of the first security algorithm, and send the node response 1 to the master node.

Example b1: The secondary node 1 obtains the information about the key length of the first security algorithm from the node request 1, and determines a second security algorithm when it is determined, based on the information about the key length of the first security algorithm, that the secondary node 1 supports the key length of the first security algorithm. Further, when it is determined that the key length of the first security algorithm is different from a key length of the second security algorithm, the secondary node 1 sends the node response 1 to the master node. For example, if key lengths supported by the secondary node 1 are 128 bits and 256 bits, and the information that is about the key length of the first security algorithm and included in the node request 1 is 256 bits, the secondary node 1 may determine that the secondary node 1 supports the key length of the first security algorithm. Further, the secondary node 1 determines that the key length of the second security algorithm is 128 bits (for example, the secondary node 1 determines the second security algorithm based on priorities of security algorithms supported by the secondary node 1, and the key length of the second security algorithm is 128 bits). In this case, the secondary node 1 determines that the key length of the first security algorithm (namely, 256 bits) is different from the key length of the second security algorithm (namely, 128 bits), and sends the node response 1 to the master node.

Example c1: The secondary node 1 determines a second security algorithm. Further, the secondary node 1 determines that the key length of the first security algorithm is different from a key length of the second security algorithm, and sends the node response 1 to the master node. For example, the information about the key length of the first security algorithm included in the node request 1 is 256 bits. The key length of the second security algorithm is 128 bits. The secondary node 1 determines that the key length of the first security algorithm (namely, 256 bits) is different from the key length of the second security algorithm (namely, 128 bits), and sends the node response 1 to the master node.

For example, the node response 1 may further include a cause value corresponding to the failure indication, and the cause value indicates a reason why the secondary node 1 returns the failure indication to the master node. For example, when the cause value is 1, the reason is that the secondary node 1 does not support the key length of the first security algorithm; when the cause value is 2, the reason is that although the secondary node 1 supports the key length of the first security algorithm, the key length of the second security algorithm determined by the secondary node 1 is different from the key length of the first security algorithm; or when the cause value is 3, the reason is that the key length of the second security algorithm determined by the secondary node 1 is different from the key length of the first security algorithm, but whether the secondary node 1 supports the key length of the first security algorithm is not indicated.

Step 804: The master node reselects a secondary node (namely, the secondary node 2).

Optionally, the master node selects the secondary node 2 from the candidate nodes. For specific implementation, refer to the description of step 600. It may be understood that, the secondary node 2 is different from the secondary node 1, and the master node specifically selects the secondary node 2 from other candidate nodes than the secondary node 1 in the candidate nodes. Further, when selecting the secondary node from the candidate nodes, the master node preferentially selects the secondary node 1, and then selects the secondary node 2. For example, in a measurement report reported by the terminal device to the master node, signal strength of the secondary node 1 is higher than signal strength of the secondary node 2.

Step 805: The master node sends the node request 2 to the secondary node 2, and correspondingly, the secondary node 2 receives the node request 2 from the master node. The node request 2 is used to request to add the secondary node 2, and the node request 2 includes the information about the key length of the first security algorithm.

Step 806: The secondary node 2 sends a node response 2 to the master node, and correspondingly, the master node receives the node response 2 from the secondary node 2.

The node response 2 is a response corresponding to the node request 2. The node response 2 indicates that the secondary node 2 is successfully added. For example, the node response 2 includes a success indication, and the success indication indicates that the secondary node 2 is successfully added.

The following provides three examples in which the secondary node 2 determines to send the node response 2 to the master node.

Example a2: The secondary node 2 obtains the information about the key length of the first security algorithm from the node request 2 and determines, based on the information about the key length of the first security algorithm, that the secondary node 2 supports the key length of the first security algorithm. Then, the secondary node 2 determines the second security algorithm based on the key length of the first security algorithm, where the key length of the first security algorithm is equal to the key length of the second security algorithm. In this case, the secondary node 2 sends the node response 2 to the master node. For example, the secondary node supports a security algorithm 1, and a key length of the security algorithm 1 is 256 bits. The information about the key length of the first security algorithm included in the node request 2 is 256 bits. The secondary node determines that the secondary node supports the key length of the first security algorithm, further determines, based on the key length of the first security algorithm, that the second security algorithm is the security algorithm 1, and sends the node response 2 to the master node.

Example b2: The secondary node 2 obtains the information about the key length of the first security algorithm from the node request 2, and determines the second security algorithm when it is determined, based on the information about the key length of the first security algorithm, that the secondary node 2 supports the key length of the first security algorithm. Further, the secondary node 2 determines that the key length of the first security algorithm is the same as the key length of the second security algorithm, and sends the node response 2 to the master node. For example, if the secondary node supports a security algorithm 1, the key length of the security algorithm 1 is 256 bits, and the information that is about the key length of the first security algorithm and included in the node request 2 is 256 bits, then the secondary node may determine that the secondary node supports the key length of the first security algorithm. Further, the secondary node determines that the second security algorithm is the security algorithm 1, and the secondary node determines that the key length of the first security algorithm (namely, 256 bits) is the same as the key length of the second security algorithm (namely, 256 bits), and sends the node response 2 to the master node.

Example c2: The secondary node 2 determines the second security algorithm. Further, the secondary node 2 determines that the key length of the first security algorithm is the same as the key length of the second security algorithm, and sends the node response 2 to the master node. For example, the secondary node supports a security algorithm 1, a key length of the security algorithm 1 is 256 bits, and the information that is about the key length of the first security algorithm and included in the node request 2 is 256 bits. The secondary node determines that the second security algorithm is the security algorithm 1, determines that the key length of the first security algorithm (namely, 256 bits) is the same as the key length of the second security algorithm (namely, 256 bits), and sends the node response 2 to the master node.

Optionally, the node response 2 includes an identifier of the second security algorithm. Optionally, the master node may obtain the identifier of the second security algorithm from the node response 2, and send the identifier of the second security algorithm to the terminal device. In this way, the terminal device obtains the identifier of the second security algorithm. For example, the identifier of the second security algorithm is carried in an RRC connection reconfiguration message sent by the master node to the terminal device.

Step 807: The secondary node 2 communicates data with the terminal device based on the second security algorithm.

For content not described in detail in step 807, refer to the description in step 404.

Based on the embodiment related to FIG. 8, this application provides, as an example, three determining manners according to which the secondary node (namely, the secondary node 1 or the secondary node 2) sends a node response to the master node after receiving the node request. For content not described in detail in the following three determining manners, refer to the description in the embodiment related to FIG. 8. It may be understood that the information about the key length of the first security algorithm may be used for one or more of the following purposes: used by the secondary node to determine whether the key length of the first security algorithm is supported, used by the secondary node to determine the second security algorithm, used by the secondary node to determine whether the key length of the second security algorithm matches the key length of the first security algorithm, or used by the secondary node to determine the node response to be sent to the master node. The node response indicates that the secondary node fails to be added, or the node response indicates that the secondary node is successfully added.

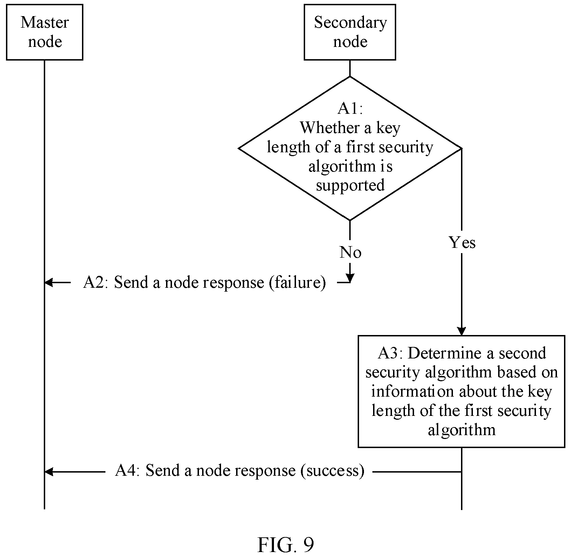

Manner A corresponds to Example a1 and Example a2. For a specific procedure, refer to a first determining method of the secondary node shown in FIG. 9.

Step A1: The secondary node determines whether the key length of the first security algorithm is supported.

When the secondary node determines that the key length of the first security algorithm is not supported:
Step A2: The secondary node sends the node response to the master node, where the node response indicates that the secondary node fails to be added.

When the secondary node determines that the key length of the first security algorithm is supported:
Step A3: The secondary node determines the second security algorithm based on the key length of the first security algorithm.

Step A4: The secondary node sends the node response to the master node, where the node response indicates that the secondary node is successfully added.

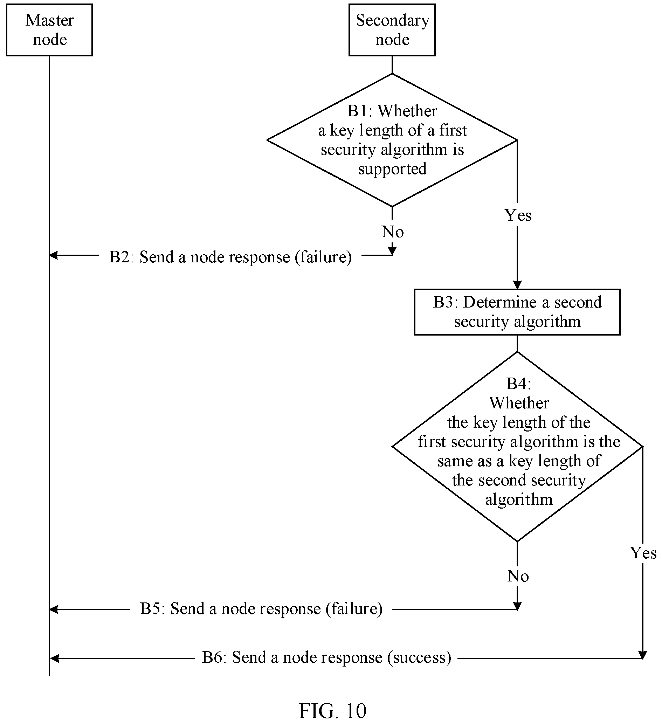

Manner B corresponds to Example b1 and Example b2. For a specific procedure, refer to a second determining method of the secondary node shown in FIG. 10.

Step B1: The secondary node determines whether the key length of the first security algorithm is supported.

When the secondary node determines that the key length of the first security algorithm is not supported:
Step B2: The secondary node sends the node response to the master node, where the node response indicates that the secondary node fails to be added.

When the secondary node determines that the key length of the first security algorithm is supported:
Step B3: The secondary node determines the second security algorithm.
Step B4: The secondary node determines whether the key length of the first security algorithm is the same as the key length of the second security algorithm.

When the secondary node determines that the key length of the first security algorithm is different from the key length of the second security algorithm:
Step B5: The secondary node sends the node response to the master node, where the node response indicates that the secondary node fails to be added.

When the secondary node determines that the key length of the first security algorithm is the same as the key length of the second security algorithm:
Step B6: The secondary node sends the node response to the master node, where the node response indicates that the secondary node is successfully added.

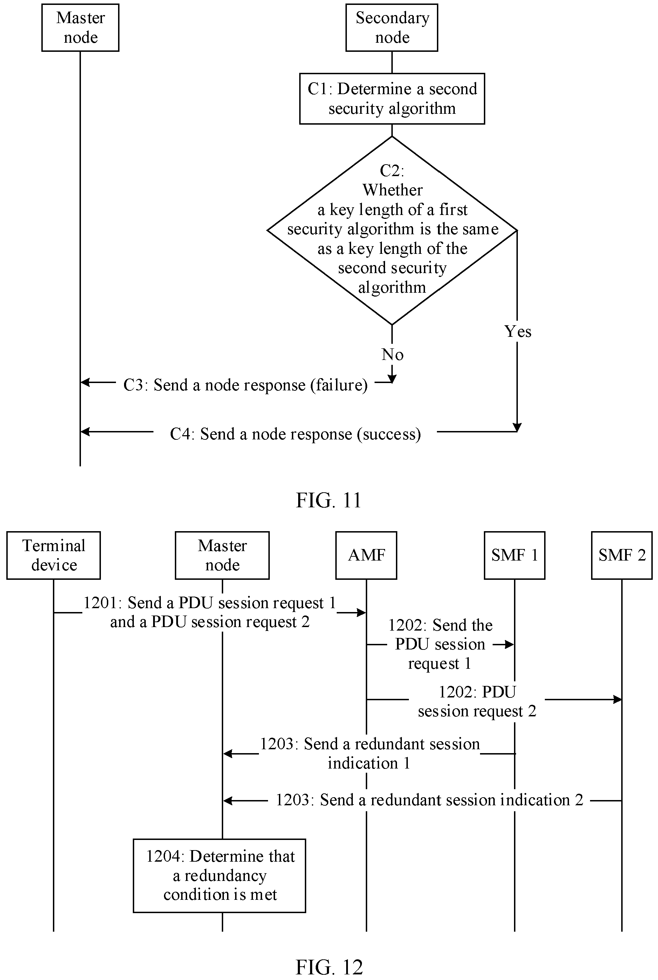

Manner C corresponds to Example c1 and Example c2. For a specific procedure, refer to a third determining method of the secondary node shown in FIG. 11.

Step C1: The secondary node determines the second security algorithm.

Step C2: The secondary node determines whether the key length of the first security algorithm is the same as the key length of the second security algorithm.

When the secondary node determines that the key length of the first security algorithm is different from the key length of the second security algorithm:
Step C3: The secondary node sends the node response to the master node, where the node response indicates that the secondary node fails to be added.

When the secondary node determines that the key length of the first security algorithm is the same as the key length of the second security algorithm:
Step C4: The secondary node sends the node response to the master node, where the node response indicates that the secondary node is successfully added.

In the embodiment related to FIG. 8 to FIG. 11, the master node determines, by sending the node request to the secondary node and receiving the node response from the secondary node, a secondary node that can be successfully added. The successfully added secondary node can meet the following condition: The master node and the secondary node each can determine an appropriate security algorithm, so that security strength of data transmitted between the master node and the terminal device matches security strength of data transmitted between the secondary node and the terminal device, thereby meeting requirements for secure communication. For example, the secondary node added according to the solution of this application can enable the security algorithms respectively selected by the master node and the secondary node to have a same key length. Further, in a scenario in which the terminal device uses a redundant data transmission service, two mutually redundant PDU sessions of the terminal device are used for transmission of same service data, and data corresponding to the two PDU sessions is protected by using the first security algorithm and the second security algorithm respectively. The key length of the first security algorithm is the same as the key length of the second security algorithm, that is, protection strength for the data corresponding to the two PDU sessions is the same, which meets a security assumption of redundant data transmission.

It should be noted that, before the embodiments related to FIG. 4 to FIG. 8, the master node may determine that a redundancy condition is met. The redundancy condition includes one or more of the following condition 1 to condition 4:
condition 1: the terminal device uses a redundant data transmission (for example, URLLC) service;
condition 2: a network establishes a redundant user plane path for the terminal device;
condition 3: a network establishes a redundant PDU session for the terminal device; or
condition 4: the network implements redundant transmission for the terminal device.

In a possible manner, the master node may determine, in the procedure shown in FIG. 12, that the redundancy condition is met.

Step 1201: The terminal device sends a PDU session request 1 and a PDU session request 2 to the AMF.

For example, when it is determined that the redundant data transmission service needs to be used, the terminal device sends the PDU session request 1 and the PDU session request 2 to the AMF. The PDU session request 1 carries a data network name (data network name, DNN) 1 and single network slice selection assistance information (single network slice selection assistance information, S-NSSAI) 1, and the PDU session request 2 carries a DNN 2 and S-NSSAI 2. The DNN 1 and the DNN 2 are the same, and the S-NSSAI 1 and the S-NSSAI 2 are different.

Step 1202: The AMF selects an SMF 1 based on the DNN 1 and the S-NSSAI 1 in the PDU session request 1, and forwards the PDU session request 1 to the SMF 1; and selects an SMF 2 based on the DNN 2 and the S-NSSAI 2 in the PDU session request 2, and forwards the PDU session request 2 to the SMF 2.

Step 1203: The SMF 1 determines, based on the PDU session request 1 and a PDU session policy 1 corresponding to the terminal device, that a PDU session 1 corresponding to the PDU session request 1 is a redundant session, and generates a redundancy sequence number (redundancy sequence number, RSN) 1 and a PDU session pair ID (PDU session pair ID) 1. The SMF 1 sends a redundant session indication 1 to the master node, where the redundant session indication 1 carries the RSN 1 and the PDU session pair ID 1. The PDU session policy 1 corresponding to the terminal device is from a PCF.

Similarly, the SMF 2 determines, based on the PDU session request 2 and a PDU session policy 2 corresponding to the terminal device, that a PDU session 2 corresponding to the PDU session request 2 is a redundant session, and generates an RSN 2 and a PDU session pair ID 2. The SMF 2 sends a redundant session indication 2 to the master node, where the redundant session indication 2 carries the RSN 2 and the PDU session pair ID 2. The PDU session policy 2 corresponding to the terminal device is from the PCF.

Step 1204: The master node determines that the RSNs carried in the redundant session indication 1 and the redundant session indication 2 are different, and that the PDU session pair IDs carried in the redundant session indication 1 and the redundant session indication 2 are the same, and further determines that the two PDU sessions corresponding to the redundant session indication 1 and the redundant session indication 2 are mutually redundant sessions. In other words, the master node determines that the redundancy condition is met.

In addition, in the embodiment related to FIG. 12, when it is determined that the redundant data transmission service needs to be used, the terminal device may alternatively determine the RSN 1 and the PDU session pair ID 1, and the RSN 2 and the PDU session pair ID 2. The RSN 1 is different from the RSN 2, and the PDU session pair ID 1 and the PDU session pair ID 2 are the same. The terminal device sends the PDU session request 1 and the PDU session request 2 to the AMF. The PDU session request 1 carries the DNN 1, the S-NSSAI 1, the RSN 1, and the PDU session pair ID 1. The PDU session request 2 carries the DNN 2, the S-NSSAI 2, the RSN 2, and the PDU session pair ID 2. Correspondingly, when receiving the PDU session request 1, the SMF 1 sends the redundant session indication 1 to the master node, where the redundant session indication 1 carries the RSN 1 and the PDU session pair ID 1. When receiving the PDU session request 2, the SMF 2 sends the redundant session indication 2 to the master node, where the redundant session indication 2 carries the RSN 2 and the PDU session pair ID 2. Then, the master node determines that the two PDU sessions corresponding to the redundant session indication 1 and the redundant session indication 2 are mutually redundant sessions, that is, determines that the redundancy condition is met. For content not described in detail in this solution, refer to the description in the embodiment related to FIG. 12.

It should be further noted that, before the embodiment related to FIG. 12, the terminal device may not have established a PDU session with the network. Then, when it is determined that the redundant data transmission service needs to be used, the terminal device sends the PDU session request 1 and the PDU session request 2 to the AMF, and then establishes the PDU session 1 and the PDU session 2 that are mutually redundant based on the embodiment related to FIG. 12. Alternatively, before the embodiment related to FIG. 12, the terminal device has already established a PDU session 0 with the network, and the master node and the terminal device have determined a security algorithm (denoted as a third security algorithm) through negotiation. When it is determined that the redundant data transmission service needs to be used, the terminal device sends the PDU session request 1 and the PDU session request 2 to the AMF, and then establishes the PDU session 1 and the PDU session 2 that are mutually redundant based on the embodiment related to FIG. 12. It may be understood that, in the latter possible manner, the master node can reuse the previously determined third security algorithm. In other words, the first security algorithm is the third security algorithm. In this scenario, the master node may determine the secondary node based on the third security algorithm. For details, refer to the descriptions in the first communication method and the fifth communication method.

The step numbers of each schematic flowchart in FIG. 4 to FIG. 12 are merely a procedure execution example, and do not constitute a limitation on a step execution sequence. In embodiments of this application, there is no strict execution sequence between steps having no time sequence dependence relationship with each other. Not all the steps shown in each schematic flowchart are mandatory steps. A part of the steps may be deleted from the schematic flowchart based on an actual requirement, or another possible step may be added to the schematic flowchart based on an actual requirement.

It should be added that, in the embodiments related to FIG. 4 to FIG. 8, when selecting the first security algorithm from the security algorithms supported by the master node, the master node needs to consider the security algorithms supported by the terminal device and the priorities of the security algorithms supported by the master node. In other words, the first security algorithm selected by the master node is a security algorithm supported by both the master node and the terminal device and has a high priority. For specific implementation, refer to the description of selecting a security algorithm by a node in a conventional technology. Similarly, when selecting the second security algorithm from the security algorithms supported by the secondary node, the secondary node needs to consider the security algorithms supported by the terminal device and the priorities of the security algorithms supported by the secondary node. Further, this application focuses on how to ensure that the key length of the first security algorithm is equal to the key length of the second security algorithm, so that the master node protects, based on the first security algorithm, the data transmitted between the master node and the terminal device, and the secondary node protects, based on the second security algorithm, the data transmitted between the secondary node and the terminal device, thereby implementing security of the communication system. Further, in the scenario in which the terminal device uses the redundant data transmission service, the terminal device establishes two mutually redundant PDU sessions, and data corresponding to the two PDU sessions is protected by using the first security algorithm and the second security algorithm respectively. The key length of the first security algorithm is the same as the key length of the second security algorithm, that is, protection strength for the data corresponding to the two PDU sessions is the same, which meets the security assumption of redundant data transmission.

In addition, this application describes only differences among the five communication methods. For content other than the differences, mutual reference may be made to the five communication methods. In addition, mutual reference may also be made to different implementations or different examples in a same communication method.

It may be understood that, to implement functions in the foregoing embodiments, the radio access node includes corresponding hardware structures and/or software modules for performing various functions. A person skilled in the art should be easily aware that, in this application, the units and method steps in the examples described with reference to embodiments disclosed in this application can be implemented by using hardware or a combination of hardware and computer software. Whether a function is performed by hardware or hardware driven by computer software depends on particular application scenarios and design constraint conditions of the technical solutions.

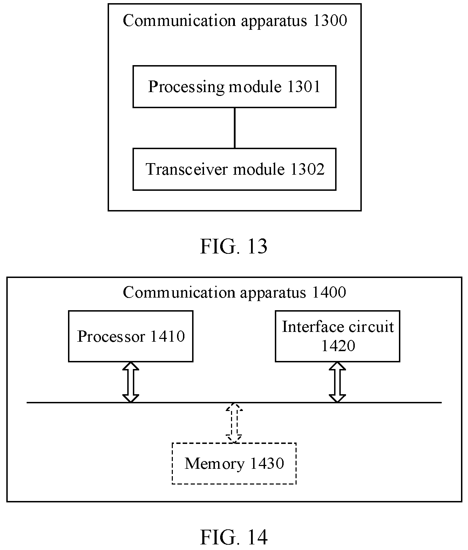

FIG. 13 and FIG. 14 are diagrams of possible structures of communication apparatuses according to embodiments of this application. These communication apparatuses may be configured to implement functions of the radio access node (the master node or the secondary node) in the foregoing method embodiments, and therefore can also implement beneficial effects of the foregoing method embodiments. The communication apparatus may be the radio access node shown in FIG. 1, or may be a module (for example, a chip) used in the radio access node.

As shown in FIG. 13, a communication apparatus 1300 includes a processing module 1301 and a transceiver module 1302. The communication apparatus 1300 is configured to implement functions of the radio access node in the related method embodiment in any one of FIG. 4 to FIG. 12.

When the communication apparatus 1300 is configured to implement functions of the master node in the related method embodiment in FIG. 4, FIG. 5, or FIG. 12:
the processing module 1301 is configured to determine a secondary node based on a key length of a first security algorithm and a key length of a security algorithm supported by a candidate node, where the first security algorithm is a security algorithm used to protect data transmitted between the master node and a terminal device, or is configured to determine a secondary node based on a key length of a security algorithm supported by a master node and a key length of a security algorithm supported by a candidate node, where the candidate node includes the secondary node. The transceiver module 1302 is configured to send a node request to the secondary node, where the node request is used to request to add the secondary node.

In a possible implementation, a key length of a security algorithm supported by the secondary node is not less than the key length of the first security algorithm, or a key length of a security algorithm supported by the secondary node is not less than a maximum key length of a security algorithm supported by the master node.

In a possible implementation, the node request includes information about the key length of the first security algorithm.

In a possible implementation, the communication apparatus 1300 further includes a storage module 1303 (not shown in FIG. 13). The storage module 1303 is configured to preconfigure information about the key length of the security algorithm supported by the candidate node. The processing module 1301 is further configured to obtain, from the storage module 1303, the key length of the security algorithm supported by the candidate node, or control the transceiver module 1302 to obtain, from the candidate node, the information about the key length of the security algorithm supported by the candidate node.

In a possible implementation, the processing module 1301 is specifically configured to: when it is determined that a redundancy condition is met, determine the secondary node based on the key length of the first security algorithm and the key length of the security algorithm supported by the candidate node; or determine the secondary node based on the key length of the security algorithm supported by the master node and the key length of the security algorithm supported by the candidate node. The redundancy condition includes one or more of the following conditions 1 to 4: the condition 1 in which the terminal device uses a URLLC service; the condition 2 in which a redundant user plane path is established for the terminal device; the condition 3 in which a redundant PDU session is established for the terminal device; or the condition 4 in which redundant transmission is implemented for the terminal device.

When the communication apparatus 1300 is configured to implement functions of the master node in the related method embodiment in FIG. 6, FIG. 7, or FIG. 12:
the processing module 1301 is configured to: obtain information about a security algorithm supported by a secondary node, and determine a first security algorithm based on the information about the security algorithm supported by the secondary node, where the first security algorithm is a security algorithm used to protect data transmitted between the master node and a terminal device. For example, the processing module 1301 is further configured to select a secondary node from candidate nodes.

In a possible implementation, the information about the security algorithm supported by the secondary node includes information about a key length of the security algorithm supported by the secondary node and/or an identifier of the security algorithm supported by the secondary node.

In a possible implementation, the transceiver module 1302 is configured to send a node request to the secondary node, where the node request is used to request to add the secondary node, and the node request includes information about a key length of the first security algorithm.

In a possible implementation, the communication apparatus 1300 further includes a storage module 1303. The storage module 1303 is configured to preconfigure the information about the security algorithm supported by the secondary node. When obtaining the information about the security algorithm supported by the secondary node, the processing module 1301 is specifically configured to obtain, from the storage module 1303, the information about the security algorithm supported by the secondary node. In still another possible implementation, when obtaining the information about the security algorithm supported by the secondary node, the processing module 1301 is specifically configured to control the transceiver module 1302 to obtain, from the secondary node, the information about the security algorithm supported by the secondary node.

In a possible implementation, the processing module 1301 is specifically configured to: when it is determined that a redundancy condition is met, determine the first security algorithm based on the information about the security algorithm supported by the secondary node. The redundancy condition includes one or more of the following conditions 1 to 4: the condition 1 in which the terminal device uses a URLLC service; the condition 2 in which a redundant user plane path is established for the terminal device; the condition 3 in which a redundant PDU session is established for the terminal device; or the condition 4 in which redundant transmission is implemented for the terminal device.

In a possible implementation, the information about the security algorithm includes the information about the key length of the security algorithm, and when determining the first security algorithm based on the information about the security algorithm supported by the secondary node, the processing module 1301 is specifically configured to determine the first security algorithm based on the information about the key length of the security algorithm supported by the secondary node and the information about the security algorithm supported by the master node.

In a possible implementation, the information about the security algorithm includes an identifier of the security algorithm, and when determining the first security algorithm based on the information about the security algorithm supported by the secondary node, the processing module 1301 is specifically configured to determine the first security algorithm and a second security algorithm based on the identifier of the security algorithm supported by the secondary node and the information about the security algorithm supported by the master node. The second security algorithm is a security algorithm used to protect data transmitted between the secondary node and the terminal device. The transceiver module 1302 is further configured to send an identifier of the second security algorithm to the secondary node.

When the communication apparatus 1300 is configured to implement functions of the master node in the related method embodiment in FIG. 8 or FIG. 12:
the processing module 1301 is configured to determine a first security algorithm, where the first security algorithm is a security algorithm used to protect data transmitted between the master node and a terminal device. The transceiver module 1302 is configured to send a node request to a secondary node, where the node request is used to request to add the secondary node, and the node request includes information about a key length of the first security algorithm.

In a possible implementation, the transceiver module 1302 is specifically configured to: when the processing module 1301 determines that a redundancy condition is met, send the node request including the information about the key length of the first security algorithm to the secondary node. The redundancy condition includes one or more of the following conditions 1 to 4: the condition 1 in which the terminal device uses a URLLC service; the condition 2 in which a redundant user plane path is established for the terminal device; the condition 3 in which a redundant PDU session is established for the terminal device; or the condition 4 in which redundant transmission is implemented for the terminal device.

In a possible implementation, when the key length of the first security algorithm is a preset key length, the node request includes the information about the key length of the first security algorithm.

In a possible implementation, the transceiver module 1302 is further configured to receive a node response from the secondary node, where the node response indicates that the secondary node fails to be added. The processing module 1301 is further configured to reselect a secondary node, and the transceiver module 1302 is further configured to send the node request to the reselected secondary node.

When the communication apparatus 1300 is configured to implement functions of the secondary node in the related method embodiment in FIG. 4 or FIG. 6:
the transceiver module 1302 is configured to receive a node request from a master node, where the node request is used to request to add the secondary node, the node request includes information about a key length of a first security algorithm, and the first security algorithm is a security algorithm used to protect data transmitted between the master node and a terminal device. The processing module 1301 is configured to determine a second security algorithm based on the information about the key length of the first security algorithm, where the second security algorithm is a security algorithm used to protect data transmitted between the secondary node and the terminal device.

In a possible implementation, a key length of the second security algorithm is the same as the key length of the first security algorithm.

In a possible implementation, the processing module 1301 is further configured to control, based on the second security algorithm, the transceiver module 1302 to communicate data with the terminal device.

When the communication apparatus 1300 is configured to implement functions of the secondary node in the related method embodiment in FIG. 7:
the transceiver module 1302 is configured to receive a node request from a master node, where the node request is used to request to add the secondary node, and the node request includes an identifier of a second security algorithm. The processing module 1301 is configured to control, based on the second security algorithm, the transceiver module 1302 to communicate data with a terminal device.

In a possible implementation, before controlling, based on the second security algorithm, the transceiver module 1302 to communicate data with the terminal device, the processing module 1301 is further configured to determine that the secondary node and/or the terminal device support/supports the second security algorithm.

In a possible implementation, the transceiver module 1302 is further configured to send a node response to the master node, where the node response indicates that the secondary node is successfully added, and the node response does not carry the identifier of the second security algorithm.

When the communication apparatus 1300 is configured to implement functions of the secondary node in the related method embodiment in any one of FIG. 8 to FIG. 11:
the transceiver module 1302 is configured to receive a node request, where the node request is used to request to add the secondary node, the node request includes information about a key length of a first security algorithm, and the first security algorithm is a security algorithm used to protect data transmitted between a master node and a terminal device;
the processing module 1301 is configured to determine that the key length of the first security algorithm is not supported, and the transceiver module 1302 is further configured to send a node response to the master node, where the node response indicates that the secondary node fails to be added; or
the processing module 1301 is configured to select a second security algorithm, and when the key length of the first security algorithm is different from a key length of the second security algorithm, the transceiver module 1302 is further configured to send a node response to the master node, where the node response indicates that the secondary node fails to be added; or
the processing module 1301 is configured to select a second security algorithm based on the key length of the first security algorithm, and the transceiver module 1302 is further configured to send a node response to the master node, where the node response indicates that the secondary node is successfully added, and the key length of the first security algorithm is the same as a key length of the second security algorithm.

For more detailed descriptions of the processing module 1301 and the transceiver module 1302, directly refer to related descriptions in the foregoing method embodiments. Details are not described herein.

As shown in FIG. 14, a communication apparatus 1400 includes a processor 1410 and an interface circuit 1420. The processor 1410 and the interface circuit 1420 are coupled to each other. It can be understood that the interface circuit 1420 may be a transceiver or an input/output interface. Optionally, the communication apparatus 1400 may further include a memory 1430 configured to store instructions executed by the processor 1410, or store input data required by the processor 1410 to run instructions, or store data generated after the processor 1410 runs instructions.

When the communication apparatus 1400 is configured to implement the method in the method embodiment related to any one of FIG. 4 to FIG. 12, the processor 1410 is configured to implement functions of the processing module 1301, and the interface circuit 1420 is configured to implement functions of the transceiver module 1302.

When the communication apparatus is a module used in a radio access node, the module of the radio access node implements functions of the radio access node in the foregoing method embodiment. For example, the radio access node is a master node, and a module of the radio access node receives information from another module (for example, a radio frequency module or an antenna) in the radio access node, where the information is sent by the secondary node to the radio access node; or the radio access node module sends information to another module (for example, a radio frequency module or an antenna) in the radio access node, where the information is sent by the radio access node to the secondary node. The module of the radio access node herein may be a baseband chip of the radio access node, or may be a distributed unit (distributed unit, DU) or another module. The DU herein may be a DU in an open radio access network (open radio access network, O-RAN) architecture.

It may be understood that, the processor in this embodiment of this application may be a central processing unit (central processing unit, CPU), or may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a transistor logic device, a hardware component, or any combination thereof. The general-purpose processor may be a microprocessor or any regular processor.

The method steps in embodiments of this application may be implemented by using hardware, or may be implemented by executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk, a removable hard disk, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in the radio access node. Certainly, the processor and the storage medium may alternatively exist as discrete components in the radio access node.

All or a part of the foregoing embodiments may be implemented by using software, hardware, firmware, or any combination thereof. When software is used to implement the embodiments, all or a part of the embodiments may be implemented in a form of a computer program product. The computer program product includes one or more computer programs or instructions. When the computer program or the instructions are loaded and executed on a computer, all or a part of procedures or functions in embodiments of this application are performed. The computer may be a general-purpose computer, a dedicated computer, a computer network, a network device, user equipment, or another programmable apparatus. The computer program or the instructions may be stored in a computer-readable storage medium, or may be transmitted from a computer-readable storage medium to another computer-readable storage medium. For example, the computer program or the instructions may be transmitted from a website, computer, server, or data center to another website, computer, server, or data center in a wired or wireless manner. The computer-readable storage medium may be any usable medium that can be accessed by a computer, or a data storage device, for example, a server or a data center, integrating one or more usable media. The usable medium may be a magnetic medium, for example, a floppy disk, a hard disk, or a magnetic tape; or may be an optical medium, for example, a digital video disc; or may be a semiconductor medium, for example, a solid-state drive. The computer-readable storage medium may be a volatile or non-volatile storage medium, or may include two types of storage media: a volatile storage medium and a non-volatile storage medium.

In embodiments of this application, unless otherwise stated or there is a logic conflict, terms and/or descriptions in different embodiments are consistent and may be mutually referenced, and technical features in different embodiments may be combined into a new embodiment based on an internal logical relationship thereof.

In this application, "at least one" means one or more, and "a plurality of" means two or more. "And/or" describes an association relationship between associated objects and indicates that three relationships may exist. For example, A and/or B may indicate the following three cases: Only A exists, both A and B exist, and only B exists, where A and B may be singular or plural. In the text descriptions of this application, the character "/" indicates an "or" relationship between the associated objects. In a formula in this application, the character "/" indicates a "division" relationship between the associated objects. "Including at least one of A, B, and C" may indicate: including A; including B; including C; including A and B; including A and C; including B and C; and including A, B, and C.

It may be understood that various numbers in embodiments of this application are merely used for differentiation for ease of description, and are not used to limit the scope of embodiments of this application. Sequence numbers of the foregoing processes do not mean an execution sequence, and the execution sequence of the processes should be determined based on functions and internal logic of the processes.

## Claims

1. A communication method, comprising:
determining a secondary node based on a key length of a first security algorithm and a key length of a security algorithm supported by a candidate node, wherein the first security algorithm is a security algorithm used to protect data transmitted between a master node and a terminal device, or determining a secondary node based on a key length of a security algorithm supported by a master node and a key length of a security algorithm supported by a candidate node, wherein the candidate node comprises the secondary node; and
sending a node request to the secondary node, wherein the node request is used to request to add the secondary node.

2. The method according to claim 1, wherein
a key length of a security algorithm supported by the secondary node is not less than the key length of the first security algorithm; or
a key length of a security algorithm supported by the secondary node is not less than a maximum key length of the security algorithm supported by the master node.

3. The method according to claim 1 or 2, wherein
the node request comprises information about the key length of the first security algorithm.

4. The method according to any one of claims 1 to 3, further comprising:
preconfiguring information about the key length of the security algorithm supported by the candidate node; or
obtaining, from the candidate node, information about the key length of the security algorithm supported by the candidate node.

5. The method according to any one of claims 1 to 4, wherein determining the secondary node based on the key length of the first security algorithm and the key length of the security algorithm supported by the candidate node or determining the secondary node based on the key length of the security algorithm supported by the master node and the key length of the security algorithm supported by the candidate node comprises:
when it is determined that one or more of the following conditions are met, determining the secondary node based on the key length of the first security algorithm and the key length of the security algorithm supported by the candidate node, or determining the secondary node based on the key length of the security algorithm supported by the master node and the key length of the security algorithm supported by the candidate node:
the terminal device uses an ultra-reliable and low latency communications URLLC service;
a redundant user plane path is established for the terminal device;
a redundant protocol data unit PDU session is established for the terminal device; or
redundant transmission is implemented for the terminal device.

6. A communication method, comprising:
obtaining information about a security algorithm supported by a secondary node; and
determining a first security algorithm based on the information about the security algorithm supported by the secondary node, wherein the first security algorithm is a security algorithm used to protect data transmitted between a master node and a terminal device.

7. The method according to claim 6, wherein
the information about the security algorithm comprises information about a key length of the security algorithm and/or an identifier of the security algorithm.

8. The method according to claim 6 or 7, further comprising:
sending a node request to the secondary node, wherein the node request is used to request to add the secondary node, and the node request comprises information about a key length of the first security algorithm.

9. The method according to any one of claims 6 to 8, wherein obtaining the information about the security algorithm supported by the secondary node comprises:
preconfiguring the information about the security algorithm supported by the secondary node; or
obtaining, from the secondary node, the information about the security algorithm supported by the secondary node.

10. The method according to any one of claims 6 to 9, wherein determining the first security algorithm based on the information about the security algorithm supported by the secondary node comprises:
when it is determined that one or more of the following conditions are met, determining the first security algorithm based on the information about the security algorithm supported by the secondary node:
the terminal device uses an ultra-reliable and low latency communications URLLC service;
a redundant user plane path is established for the terminal device;
a redundant protocol data unit PDU session is established for the terminal device; or
redundant transmission is implemented for the terminal device.

11. The method according to any one of claims 6 to 10, wherein the information about the security algorithm comprises the information about the key length of the security algorithm, and determining the first security algorithm based on the information about the security algorithm supported by the secondary node comprises:
determining the first security algorithm based on the information about the key length of the security algorithm supported by the secondary node and information about a security algorithm supported by the master node.

12. The method according to any one of claims 6 to 11, wherein the information about the security algorithm comprises the identifier of the security algorithm, and determining the first security algorithm based on the information about the security algorithm supported by the secondary node comprises:
determining the first security algorithm and a second security algorithm based on the identifier of the security algorithm supported by the secondary node and the information about the security algorithm supported by the master node, wherein the second security algorithm is a security algorithm used to protect data transmitted between the secondary node and the terminal device; and
the method further comprises:
sending an identifier of the second security algorithm to the secondary node.

13. A communication method, comprising:
determining a first security algorithm, wherein the first security algorithm is a security algorithm used to protect data transmitted between a master node and a terminal device; and
sending a node request to a secondary node, wherein the node request is used to request to add the secondary node, and the node request comprises information about a key length of the first security algorithm.

14. The method according to claim 13, further comprising:
when it is determined that one or more of the following conditions are met, sending the node request to the secondary node:
the terminal device uses an ultra-reliable and low latency communications URLLC service;
a redundant user plane path is established for the terminal device;
a redundant protocol data unit PDU session is established for the terminal device; or
redundant transmission is implemented for the terminal device.

15. The method according to claim 13 or 14, wherein when the key length of the first security algorithm is a preset key length, the node request comprises the information about the key length of the first security algorithm.

16. The method according to any one of claims 13 to 15, further comprising:
receiving a node response from the secondary node, wherein the node response indicates that the secondary node fails to be added; and
reselecting a secondary node, and sending the node request to the reselected secondary node.

17. A communication method, comprising:
receiving a node request from a master node, wherein the node request is used to request to add a secondary node, the node request comprises information about a key length of a first security algorithm, and the first security algorithm is a security algorithm used to protect data transmitted between the master node and a terminal device; and
determining a second security algorithm based on the information about the key length of the first security algorithm, wherein the second security algorithm is a security algorithm used to protect data transmitted between the secondary node and the terminal device.

18. The method according to claim 17, wherein a key length of the second security algorithm is the same as the key length of the first security algorithm.

19. A communication method, comprising:
receiving a node request from a master node, wherein the node request is used to request to add a secondary node, and the node request comprises an identifier of a second security algorithm; and
communicating data with a terminal device based on the second security algorithm.

20. The method according to claim 19, wherein before communicating data with the terminal device based on the second security algorithm, the method further comprises:
determining that the secondary node and/or the terminal device support/supports the second security algorithm.

21. The method according to claim 19 or 20, further comprising:
sending a node response to the master node, wherein the node response indicates that the secondary node is successfully added, and the node response does not carry the identifier of the second security algorithm.

22. A communication method, comprising:
receiving a node request, wherein the node request is used to request to add a secondary node, the node request comprises information about a key length of a first security algorithm, and the first security algorithm is a security algorithm used to protect data transmitted between a master node and a terminal device; and
when it is determined that the key length of the first security algorithm is not supported, sending a node response to the master node, wherein the node response indicates that the secondary node fails to be added; or
selecting a second security algorithm, and when the key length of the first security algorithm is different from a key length of the second security algorithm, sending a node response to the master node, wherein the node response indicates that the secondary node fails to be added; or
selecting a second security algorithm based on the key length of the first security algorithm, and sending a node response to the master node, wherein the node response indicates that the secondary node is successfully added, and the key length of the first security algorithm is the same as a key length of the second security algorithm.

23. A communication apparatus, comprising:
a module configured to perform the method according to any one of claims 1 to 5; or
a module configured to perform the method according to any one of claims 6 to 12; or
a module configured to perform the method according to any one of claims 13 to 16; or
a module configured to perform the method according to claim 17 or 18; or
a module configured to perform the method according to any one of claims 19 to 21; or
a module configured to perform the method according to claim 22.

24. A communication apparatus, comprising a processor and an interface circuit, wherein the interface circuit is configured to: receive a signal from a communication apparatus other than the communication apparatus and transmit the signal to the processor, or send a signal from the processor to a communication apparatus other than the communication apparatus, and the processor is configured to:
implement the method according to any one of claims 1 to 5; or
implement the method according to any one of claims 6 to 12; or
implement the method according to any one of claims 13 to 16; or
implement the method according to claim 17 or 18; or
implement the method according to any one of claims 19 to 21; or
implement the method according to claim 22 by using a logic circuit or by executing code instructions.

25. A computer-readable storage medium, wherein the computer-readable storage medium stores a computer program or instructions, and when the computer program or the instructions are executed by a communication apparatus,
the method according to any one of claims 1 to 5 is implemented; or
the method according to any one of claims 6 to 12 is implemented; or
the method according to any one of claims 13 to 16 is implemented; or
the method according to claim 17 or 18 is implemented; or
the method according to any one of claims 19 to 21 is implemented; or
the method according to claim 22 is implemented.

26. A computer program product, wherein the computer program product comprises a computer program or instructions, and when the computer program or the instructions are executed by a communication apparatus,
the method according to any one of claims 1 to 5 is implemented; or
the method according to any one of claims 6 to 12 is implemented; or
the method according to any one of claims 13 to 16 is implemented; or
the method according to claim 17 or 18 is implemented; or
the method according to any one of claims 19 to 21 is implemented; or
the method according to claim 22 is implemented.

27. A communication system, comprising:
a first communication apparatus and a second communication apparatus, wherein
the first communication apparatus is configured to perform the method according to any one of claims 1 to 5, and the second communication apparatus is configured to perform the method according to claim 17 or 18; or
the first communication apparatus is configured to perform the method according to any one of claims 6 to 12, and the second communication apparatus is configured to perform the method according to claim 17 or 18; or
the first communication apparatus is configured to perform the method according to any one of claims 6 to 12, and the second communication apparatus is configured to perform the method according to any one of claims 19 to 21; or
the first communication apparatus is configured to perform the method according to any one of claims 13 to 16, and the second communication apparatus is configured to perform the method according to claim 22.
